# EUROPÄISCHE PATENTSCHRIFT

(11) **EP 1 544 232 B1**
(45) Veröffentlichungstag und Bekanntmachung des Hinweises auf die Patenterteilung: **03.03.2010**
(21) Anmeldenummer: 04028791.4
(22) Anmeldetag: 04.12.2004
(51) Int. Cl.: C08G 77/38, C08G 77/08, C09D 183/06

(54) **Polysiloxane mit über SiOC-Gruppen gebundenen (Meth)acrylsäureestergruppen, Verfahren zu deren Herstellung sowie deren Verwendung als strahlenhärtbare abhäsive Beschichtung**
Polysiloxanes with SiOC-bounded (meth)acrylic acid ester groups, process for their preparation and their use as irradiation-curable release coating
Polysiloxanes ayant des groupes ester (méth)acrylique liés par SiOC, procédé pour leur préparation et leur application comme couche antiadhérente, durcissable par irradiation.

(30) Priorität: 19.12.2003 DE 10359764
(43) Veröffentlichungstag der Anmeldung: 22.06.2005
(73) Patentinhaber: Evonik Goldschmidt GmbH, 45127 Essen (DE)
(72) Erfinder: Döhler, Hardi, 45525 Hattingen (DE); Esselborn, Jutta, 45147 Essen (DE); Herrwerth, Sascha, Dr., 45128 Essen (DE); Neumann, Thomas, Dr., 44869 Bochum (DE)

(56) Entgegenhaltungen:
- EP-A- 1 460 098
- EP-A- 1 460 099
- WO-A-01/74938
- WO-A-01/79330
- US-A1- 2003 065 117
- BLACKWELL JAMES M: "B(C6F5)3-catalyzed silylation of alcohols: a mild , general method for synthesis of silyl ethers" CAPLUS, Bd. 1999, Nr. 354965, 6. September 1999 (1999-09-06), XP002163708

## Beschreibung

Die Erfindung betrifft neue Polysiloxane mit über SiOC-Gruppen gebundenen (Meth)acrylsäureestergruppen und ein Verfahren zur Herstellung, bei der unter Verwendung eines Katalysators ein an das Silicium gebundenes Wasserstoffatom durch einen Alkoholatrest ersetzt wird. Die Erfindung betrifft ferner die Verwendung dieser neuen Organopolysiloxane als strahlenhärtbare Beschichtungsmassen zur Herstellung abhäsiver Beschichtungen.

Abhäsive Beschichtungsmassen werden in größerem Umfang zur Beschichtung insbesondere von flächigen Materialien verwendet, um die Adhäsionsneigung von adhärierenden Produkten gegenüber diesen Oberflächen zu verringern.

Abhäsive Beschichtungsmassen werden beispielsweise zur Beschichtung von Papieren oder Folien verwendet, welche als Träger für selbstklebende Etiketten dienen sollen. Die mit einem Haftkleber versehenen Etiketten haften auf der beschichteten Oberfläche noch in genügendem Maße, um die Handhabung zu ermöglichen. Die Haftung der Klebeetiketten auf dem Träger muss so hoch sein, dass bei der maschinellen Applikation von Etiketten, z.B. auf Gebinden, beim Lauf der mit den Etiketten versehenen Träger über Umlenkwalzen kein vorzeitiges Ablösen erfolgt. Andererseits müssen jedoch die Etiketten von dem beschichteten Träger abziehbar sein, ohne dass ihre Klebkraft für die spätere Verwendung wesentlich beeinträchtigt wird. Dazu ist eine besonders gute Aushärtung der Silicontrennschicht erforderlich, da ansonsten Siliconbestandteile auf die Kleberoberfläche übergehen können und die Klebkraft reduzieren.

Weitere Anwendungsmöglichkeiten für abhäsive Beschichtungsmassen sind Verpackungspapiere und -folien, die insbesondere zur Verpackung von klebrigen Gütern dienen. Derartige abhäsive Papiere oder Folien werden beispielsweise zum Verpacken von Lebensmitteln oder zum Verpacken technischer Produkte, wie z.B. Bitumen, verwendet.

Eine weitere Anwendung von abhäsiven Beschichtungsmassen besteht in der Herstellung von Haftverschlüssen, wie z.B. bei sogenannten Höschenwindeln. Ist die Abhäsivität zu hoch, d.h. der Trennwert zu niedrig, bleibt die Windel nicht zuverlässig geschlossen. Ist die Abhäsivität zu niedrig und damit der Trennwert zu hoch, lässt sich der Verschluss nicht mehr ohne Zerreißen der Windel öffnen.

Für die Funktion der abhäsiven Beschichtung ist in allen Anwendungen die Stabilität der Abhäsivität über lange Zeiträume wichtig. Es darf weder zu einer nennenswerten Erhöhung noch Erniedrigung des Trennwertes kommen.

Seit den achtziger Jahren sind zwei strahlenhärtende abhäsive Beschichtungsmassen im Markt bekannt. Ein System, bestehend aus epoxyhaltigen Siliconen, härtet unter UV-Strahlung nach einem kationischen Härtungsmechanismus aus. Dieses System wird u.a. in den US-Schriften 4 421 904; 4 547 431; 4 952 657; 5 217 805; 5 279 860; 5 340 898; 5 360 833; 5 650 453; 5 866 261 und 5 973 020 beschrieben.

Das andere System härtet nach einem freien radikalischen Polymerisationsmechanismus nach Bestrahlung mit UV- oder Elektronenstrahlen aus. Solche Systeme sind z.B. in den US-Schriften 4 201 808, 4 568 566, 4 678 846, 5 494 979, 5 510 190, 5 552 506, 5 804 301, 5 891 530 und 5 977 282 beschrieben.

In Systemen, die nach einem freien radikalischen Mechanismus aushärten sind die polymerisierbaren Gruppen typischerweise (Meth)acrylsäureestergruppen.

Im Falle der UV-Vernetzung werden den letztgenannten Organosiliciumverbindungen Photoinitiatoren zugegeben. Geeignete Photoinitiatoren werden u.a. in "J.P. Fouassier, Polymerization photoinitiators: Exited state process and kinetic aspects, Progress in Organic Coating, 18 (1990) 229-252", in "J.P. Fouassier, Photochemical reactivity of UV radical photoinitiators of polymerisation: A general discussion, Recent Res. Devel. Photochem. & Photobiol., 4(2000): 51-74", "D. Ruhlmann et al, Relations structure-proprietes dans les photoamorceurs de polymerisation-2. Derives de Phenyl Acetophenone, Eur. Polym. J. Vol. 28, No. 3, pp. 287-292, 1992" und "K.K. Dietliker, Chemistry & Technology of UV & EB Formulation for Coatings, Inks & Paints, Volume 3, Sita Technology Ltd, UK", sowie in DE-10248111 und US-4 347 111 genannt.

Im Stand der Technik werden auch Mischungen von mehreren (meth)acrylierten Polysiloxanen mit unterschiedlichen Kettenlängen und/oder Modifizierungsarten erwähnt (US-B-6 548 568, US-B-6 268 404, Goldschmidt Veröffentlichung "TEGO® RC Silicones, Application Guide", Goldschmidt Produktdatenblätter zu den Produkten TEGO® RC 902, RC 726, RC 711, RC 708, RC 709, RC 715, RC 706). Solche Mischungen können gegenüber den Einzelkomponenten beispielsweise den Vorteil einer verbesserten Haftung am Untergrund, des gezielten Einstellens der Abhäsivität oder der Verringerung oder Erhöhung der Viskosität bieten.

Zur Herstellung abhäsiver Beschichtungen wird üblicherweise eine Mischung aus mehreren der genannten Organosiliciumverbindungen auf flächige Träger aus Kunststoff, Metall oder Papier aufgebracht und bahnförmig von Rolle zu Rolle bei hohen Anlagengeschwindigkeiten von mehreren hundert Metern pro Minute durch eine Elektronenstrahlanlage oder eine UV-Anlage geführt und gehärtet.

Polysiloxane können auf vielfältige Art mit (Meth)acrylsäureestergruppen versehen werden. Um organische Gruppen an ein Siloxan zu binden, stehen grundsätzlich zwei verschiedene Bindungstypen zur Verfügung. Im ersten Fall ist ein Kohlenstoffatom direkt an ein Siliciumatom gebunden (SiC-Verknüpfung), im zweiten Fall ist ein Kohlenstoffatom über ein Sauerstoffatom an das Siliciumatom gebunden (SiOC-Verknüpfung).

Organopolysiloxane, bei denen die acrylsäureesterhaltigen organischen Gruppen über Si-C-Bindungen mit dem Polysiloxangerüst verbunden sind, sind Stand der Technik. Diese können z.B. dadurch hergestellt werden, dass man an ein Wasserstoffsiloxan Allylglycidether oder ein anderes geeignetes Epoxid mit einer olefinischen Doppelbindung addiert und nach der Anlagerung das Epoxid mit Acrylsäure unter Öffnung des Epoxidringes verestert. Diese Verfahrensweise ist in der US-4 978 726 beschrieben.

Eine weitere Möglichkeit der Herstellung (meth)acrylatmodifizierter Polysiloxane mit Si-C-Verknüpfung der modifizierenden Gruppe(n) besteht darin, dass man an ein Wasserstoffsiloxan einen Alkohol mit einer olefinischen Doppelbindung, z. B. Allylalkohol, in Gegenwart eines Platinkatalysators addiert und dann die OH-Gruppe dieses Alkohols mit Acrylsäure oder einem Gemisch von Acrylsäure und anderen gegebenenfalls gesättigten Säuren umsetzt. Diese Verfahrensweise ist z. B. in der US-4 963 438 beschrieben.

Des Weiteren ist es möglich, jeweils mehrere (Meth)acrylatgruppen pro Verbindungsglied an das Siloxangerüst zu binden. Um eine möglichst gute Vernetzung, das heißt, eine möglichst hohe Anzahl an reaktiven Gruppen, bei gleichzeitig so geringer Modifizierungsdichte am Siloxangerüst wie möglich zu erzielen, ist es wünschenswert, mehr als eine (Meth)acrylatgruppe je Verbrückungsglied anzubinden. Solche Verfahren sind z.B. in der US-B-6 211 322 beschrieben.

Alle diese via SiC-synthetisierten (meth)acrylat-modifizierten Organosiloxane, die zur Zeit den Stand der Technik darstellen, haben den Nachteil, dass sie in mehrstufigen Synthesen hergestellt werden müssen sowie die daraus resultierenden hohen Kosten und der hohe technische Aufwand für die Produktion.

Für die Bildung einer SiOC-Verknüpfung stehen mehrere Methoden zur Verfügung. Klassischerweise werden SiOC-Verknüpfungen durch die Reaktion eines Siloxans mit einer am Siliciumatom gebundenen Abgangsgruppe (z.B. Halogen) und einem Alkohol gebildet.

Organopolysiloxane, bei denen die (meth)acrylathaltigen organischen Gruppen über eine Si-O-C-Bindung mit dem Polysiloxangerüst über Halogen als Abgangsgruppe verbunden sind, sind in der US-4 301 268 und der US-4 306 050 beschrieben. Besonders Chlorsiloxane sind für diesen Reaktionstyp weit verbreitet.

Chlorsiloxane sind jedoch schwierig zu handhaben, da sie äußerst reaktionsfreudig sind. Der Einsatz von Chlorsiloxanen ist weiterhin mit dem Nachteil verbunden, dass der im Verlauf der Reaktion gebildete Chlorwasserstoff zu ökologischen Problemen führt und eine Handhabung auf korrosionsbeständige Anlagen beschränkt. Darüber hinaus können in Gegenwart von Chlorsiloxanen und Alkoholen organische Chlorverbindungen gebildet werden, die aus toxikologischen Gründen nicht wünschenswert sind.

Weiterhin ist es nicht einfach, bei der Reaktion eines Chlorsiloxans mit einem Alkohol einen quantitativen Umsatz zu erreichen. Häufig müssen Basen, die als HCl-Fänger dienen, eingesetzt werden, um gute Umsätze zu erzielen. Durch Einsatz dieser Basen kommt es zur Bildung großer Mengen an Salzfracht, die ihrerseits im industriellen Maßstab Probleme bei der Entfernung und Entsorgung bereiten.

Die Stabilität der Si-O-C Bindung über lange Zeiträume ist entscheidend für die Stabilität des Trennverhaltens einer daraus hergestellten abhäsiven Beschichtung. Es sollen daher keine Reaktions- oder Katalysatorrückstände in der Beschichtung verbleiben, die geeignet sind die Hydrolyse der SiOC-Bindung zu katalysieren. Die genannten Verfahren produzieren jedoch Säurerückstände oder eine Salzfracht, die nicht vollständig aus dem Reaktionsgemisch entfernbar ist. Es verbleiben katalytisch aktive Mengen in der abhäsiven Beschichtung, die auch nach deren Vernetzung die SiOC-Bindung abbauen können. Zudem sind nach den genannten Verfahren nur endständig modifizierte Organopolysiloxane zugänglich und somit keine Möglichkeit zur Synthese von mittelständig via SiOC-(meth)acrylat-modifizierten Organosiloxanen gegeben.

Neben der weit verbreiteten Darstellung von endständigen (α,ω)-Organopolysiloxanen mit Chlorsiloxanen und Alkoholen wird in der US-5 310 842 für die Synthese von mittelständig modifizierten Organopolysiloxanen via SiOC-Chemie die dehydrogenative Hydrosilylierung von lang- und kurzkettigen aliphatischen Alkoholen an SiH-Siloxane unter Verwendung von Pt-Verbindungen und einer organischen Säure als Co-Katalysator beschrieben. Diese Methode ist folglich geeignet, um verschiedene aliphatische Alkohole end- und seitenständig dehydrogenativ an SiH-Siloxane zu koppeln.

Eine ähnliche Vorgehensweise für eine partielle dehydrogenative Hydrosilylierung von SiH-Einheiten mit kurzkettigen Alkoholen unter Verwendung von Pt-Katalysatoren wird in der US-B-6,359,097 beschrieben. Die dabei nicht vollständig umgesetzten SiH-Einheiten werden anschließend mit olefinischen Verbindungen hydrosilyliert.

Für den Fachmann ist jedoch leicht ersichtlich, dass diese zuvor beschriebenen Vorgehensweisen. bei (meth)acrylgruppenhaltigen Alkoholen nicht praktikabel sind, da verschiedene Pt-katalysierte Nebenreaktionen, wie eine Anbindung der Doppelbindung oder Carbonylgruppe der (Meth)acrylatgruppengruppen an die SiH-Einheiten auftreten (Journal of Polymer Science: Part A: Polymer Chemistry, Vol. 29, 1073-1076).

Des Weiteren wird in der US-B-6 239 303 die dehydrogenative Hydrosilylierung verschiedener Alkohole an Silane unter Verwendung von Ru-Katalysatoren mit Carbonylliganden beschrieben. Auch diese Vorgehensweise ermöglicht keine dehydrogenative Hydrosilylierung von (meth)acrylgruppenhaltigen Alkoholen an Polysiloxane, da Ru-Komplexe ebenfalls eine Reaktion der (Meth)acrylatgruppen mit den SiH-Einheiten katalysieren.

Folglich steht nach dem Stand der Technik keine Möglichkeit zur Synthese von mittelständig (meth)acrylat-modifizierten Organosiloxanen via SiOC-Chemie mit definierten Strukturen zur Verfügung. Die bekannten Verfahren, die zu endständig (via SiOC-(meth)acrylat-modifizierten) Organosiloxanen führen, hinterlassen katalytische Mengen an SiOC-Bindungen abbauenden Substanzen.

Es bestand daher der Bedarf, ein technisch einfaches Verfahren zu finden, das es erlaubt, neue via SiOC-Chemie end- und/oder seitenständige, (meth)acrylat-modifizierte, strahlenhärtbare Polysiloxane ohne Abbau des Siloxangrundgerüsts herzustellen.

Des Weiteren sollten die erhaltenen Produkte im Gegensatz zum Verfahren nach dem Stand der Technik, wie z.B. ausgehend von Chlorsiloxanen, nicht mit aus der Substitutionsreaktion stammender Salzsäure, bzw. deren Neutralisationsprodukten entsprechenden Chloriden verunreinigt sein und somit die dargestellten (meth)acrylat-modifizierten Polysiloxane eine höhere Hydrolysestabilität der SiOC-Bindung aufweisen.

Es wurde nun überraschenderweise gefunden, dass unter Verwendung eines lewissauren Katalysators oder einer Mischung aus einer Carbonsäure und dem Salz einer Carbonsäure (meth)acrylathaltige Alkohole selektiv an end- und/oder seitenständige SiH-Siloxane gekoppelt werden können, ohne dass ein Abbau des Siloxangerüstes oder Hydrosilylierung der (Meth)acrylatgruppengruppen an SiH-Gruppen beobachtet werden.

Ein Gegenstand der vorliegenden Erfindung sind somit neue Organopolysiloxane mit über SiOC-Gruppen mittel- und endständig oder nur mittelständig gebundene (Meth)acrylsäureester tragende Gruppen der allgemeinen durchschnittlichen Formel (I) 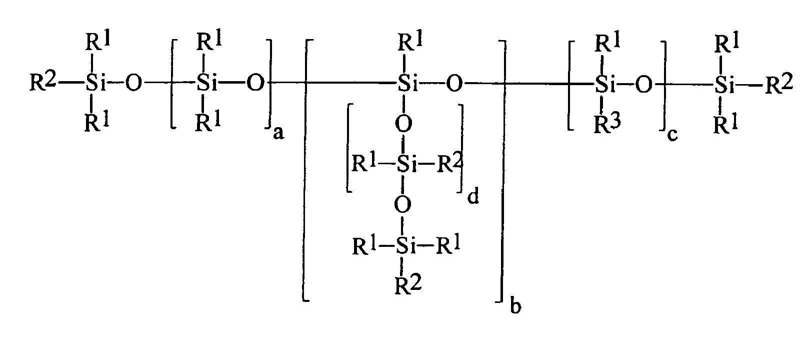 worin
- R¹: gleiche oder verschiedene Reste, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen,
- R²: gleiche oder verschiedene Reste R¹ oder R³ sind,
- R³: gleiche oder verschiedene einfach oder mehrfach (meth)acrylierte Monoalkoxylate oder (meth)acrylierte Polyalkoxylate, oder eine Mischung der einfach oder mehrfach (meth)acrylierten Monoalkoxylate oder Polyalkoxylate mit beliebigen anderen Alkoxylaten, die ausgewählt sind aus der Gruppe der linearen oder verzweigten, gesättigten, ein- oder mehrfach ungesättigten, aromatischen, aliphatischaromatischen Mono- oder Polyalkohole, Polyethermonoalkohole, Polyetherpolyalkohole, Polyestermonoalkohole, Polyesterpolyalkohole, Aminoalkohole, insbesondere N-Alkyl, Arylamino-Ethylenoxyd-, -Propylenoxyd-Alkohole, N-Alkyl- oder Arylaminoalkoxylate sowie deren Gemischen, wobei das Verhältnis der einfach oder mehrfach (meth)acrylierten Monoalkoxylate oder Polyalkoxylate zu den beliebigen anderen Alkoxylaten so gewählt wird, dass mindestens ein einfach oder mehrfach (meth)acrylierter Monoalkoxylat- oder Polyalkoxylat-Rest in dem Organopolysiloxan enthalten ist,
- a: 0 bis 1.000,vorzugsweise 0 bis 500, insbesondere 0 bis 300,
- b: 0 bis 5,
- c: 1 bis 200,vorzugsweise 2 bis 100, insbesondere 3 bis 80,
- d: 0 bis 1.000, vorzugsweise 0 bis 500, insbesondere 0 bis 300 ist.

Ein weiterer Gegenstand der vorliegenden Erfindung ist ein Verfahren zur Herstellung von Organopolysiloxanen mit über SiOC-Gruppen mittel- und/oder endständig gebundenen (Meth)acrylsäureestergruppen durch Umsetzung von SiH-Gruppen enthaltenden Polysiloxanen der allgemeinen durchschnittlichen Formel (II) 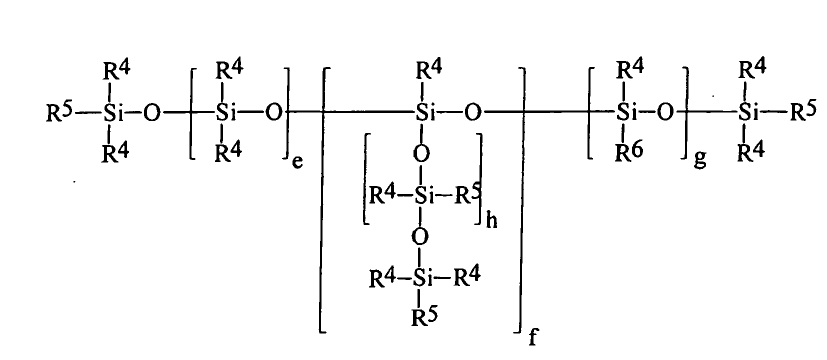 in denen
- R⁴: gleiche oder verschiedene Reste sind, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen,
- R⁵: H oder R⁴,
- R⁶: H,
- e: 0 bis 1.000,
- f: 0 bis 5,
- g: 0 bis 200,
- h: 0 bis 1.000
sind,
wobei mindestens ein Rest R⁵ oder R⁶ = H sein muss,
mit einem Alkohol, der ausgewählt ist aus der Gruppe der einfach oder mehrfach (meth)acrylierten Monoalkohole oder Polyalkohole, oder aus Mischungen der einfach oder mehrfach (meth)acrylierten Monoalkohole oder Polyalkohole mit beliebigen anderen Alkoholen, die ausgewählt sind aus der Gruppe der linearen oder verzweigten, gesättigten, ein- oder mehrfach ungesättigten, aromatischen, aliphatisch-aromatischen Monooder Polyalkohole, Polyethermonoalkohole, Polyetherpolyalkohole, Polyestermonoalkohole, Polyesterpolyalkohole, Aminoalkohole, insbesondere N-Alkyl-, Arylamino-EO-, -PO-Alkoholen, N-Alkyl- oder Arylaminoalkohole sowie deren Gemischen, welches dadurch gekennzeichnet ist, dass man in einem oder mehreren Verfahrensschritten unter Einsatz eines lewissauren Katalysators oder eines Katalysators bestehend aus einer Carbonsäure und Salzen von Carbonsäuren die vorhandenen SiH-Gruppen des Polysiloxans teilweise oder vollständig durch Alkoholatreste der eingesetzten Alkohole ersetzt.

Bevorzugte wirksame lewissaure Katalysatoren im Sinne der vorliegenden Erfindung für Verbindungen mit sowohl endständigen als auch mittelständigen (Meth)acrylatresten sind die lewissauren Elementverbindungen der III. Hauptgruppe insbesondere borhaltige und/oder aluminiumhaltige Elementverbindungen.

Von den lewissauren Elementverbindungen der 3. Nebengruppe sind insbesondere scandiumhaltige, yttriumhaltige, lanthanhaltige und/oder lanthanoidhaltige Lewissäuren bevorzugt.

Erfindungsgemäß werden die Elementverbindungen der III. Haupt- und/oder 3. Nebengruppe besonders bevorzugt als Halogenide, Alkylverbindungen, fluorhaltige, cycloaliphatische und/oder heterocyclische Verbindungen eingesetzt.

Eine bevorzugte Ausführungsform der Erfindung sieht vor, dass fluorierte und/oder nicht fluorierte Organoborverbindungen eingesetzt werden, insbesondere solche, die ausgewählt sind aus:
(C₅F₄)(C₆F₅) ₂B; (C₅F₄)₃B; (C₆F₅)BF₂; BF(C₆F₅)₂; B(C₆F₅)₃; BCl₂(C₆F₅); BCl(C₆F₅) ₂; B(C₆H₅) (C₆F₅) ₂; B(Ph)₂(C₆F₅) *;* [C₆H₄(mCF₃)]₃Bi [C₆H₄(pOCF₃)]₃B; (C₆F₅)B(OH)₂; (C₆F₅)₂BOH; (C₆F₅)₂BH; (C₆F₅)BH₂; (C₇H₁₁)B(C₆F₅) ₂; (C₈H₁₄B)(C₆F₅) ; (C₆F₅)₂B(OC₂H₅) ; (C₆F₅)₂B-CH₂CH₂Si (CH₃)₃; 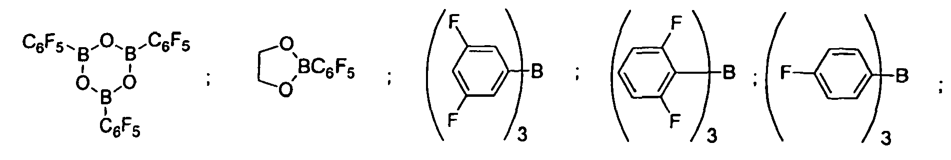 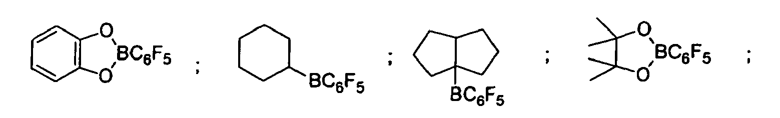 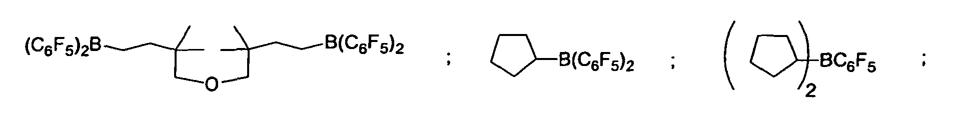 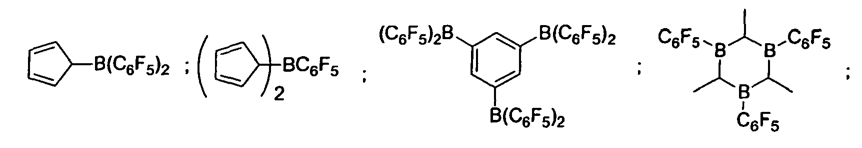 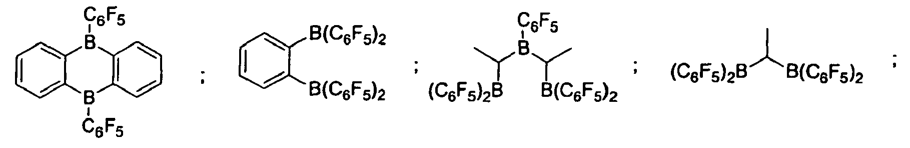 insbesondere Bortrifluorid-Etherat [109-63-7], Boran-Triphenylphosphinkomplex [2049-55-0], Triphenylboran [960-71-4], Tris (Perfluortriphenylboran) [1109-15-5], Triethylboran [97-94-9] und Bortrichlorid [10294-34-5], Tris(pentafluorophenyl)-Boroxin (9CI) [223440-98-0], 4,4,5,5,-Tetramethyl-2-(pentafluorophenyl)-1,3,2-Dioxaborolan (9CI) [325142-81-2], 2-(Pentafluorophenyl)-1,3,2-Dioxaborolan (9CI) [336880-93-4], Bis(pentafluorophenyl)cyclohexylboran [245043-30-5], Di-2,4-cyclopentadien-1-yl(pentafluorophenyl)-Boran (9CI) [336881-03-9], (Hexahydro-3a(1H)-pentalenyl)bis(pentafluorophenyl)boran (9CI) [336880-98-9] , 1,3-[2-[Bis(pentafluorophenyl)boryl]ethyl]-tetramethyldisiloxan [336880-99-0], 2,4,6-Tris(pentafluorophenyl)borazin (7CI, 8CI, 9CI) [1110-39-0], 1,2-Dihydro-2-(pentafluorophenyl)-1,2-azaborin (9CI) [336880-94-5], 2-(Pentafluorophenyl)-1,3,2-benzodioxaborol (9CI) [336880-96-7], Tris(4-trifluoromethoxyphenyl)boran [336880-95-6], Tris(3-trifluoromethylphenyl)boran [24455-00-3], Tris(4-fluorophenyl)-boran [47196-74-7], Tris(2,6-difluorophenyl)boran [146355-09-1], Tris(3,5-difluorophenyl)boran [154735-09-8] sowie Gemische der vorstehenden Katalysatoren.

Die Umsetzung der endständigen und/oder seitenständigen Si-H-funktionellen Siloxane mit den zuvor definierten Alkoholen mit borhaltigen Lewissäuren werden nach der allgemeinen Synthesevorschrift durchgeführt:

Der Alkohol wird mit oder ohne Lösungsmittel und dem Bor-Katalysator unter Schutzgas vorgelegt und auf 70 °C bis 150 °C erhitzt. Anschließend wird das Si-H-funktionelle Siloxan zugetropft und die Reaktionsmischung bis zur vollständigen Umsetzung gerührt. Die Reaktionsführung kann dahin modifiziert werden, dass der Alkohol, der Bor-Katalysator und dass Si-H-funktionelle Siloxan mit oder ohne Lösungsmittel vorgelegt und auf Reaktionstemperatur erwärmt werden (Eintopfreaktion).
Des Weiteren können diese Umsetzungen unter Verwendung von Schutzgas, Magerluft oder Inhibitoren durchgeführt werden.

Weitere wirksame Katalysatoren im Sinne der vorliegenden Erfindung insbesonders für Verbindungen mit endständigen und/oder seitenständigen (Meth)acrylatresten sind Mischungen aus mindestens einer Säure und mindestens einem Salz einer Säure, bevorzugt Mischungen aus mindestens einer organischen Säure, wie z. B. einer Carbonsäure, Dithiocarbonsäure, Aryl-/Alkylsulfonsäure, Aryl-/Alkylphosphonsäure oder Aryl-/Alkylsulfinsäure und mindestens einem Metall- oder Ammoniumsalz einer organischen Säure, wobei das Metallkation ein- oder mehrwertig sein kann, eingesetzt. Das Verhältnis von Salz und Säure kann in weiten Bereichen variiert werden, bevorzugt ist ein Stoffmengenverhältnis von Säure zu Salz im Bereich von 1 : 5 bis 5 : 1, insbesondere 2 : 3 bis 3 : 2 Moläquivalenten. Weiterhin können mehrwertige Säuren oder Mischungen aus ein- und mehrwertigen Säuren sowie die entsprechenden Salze mit ein- oder mehrwertigen Kationen eingesetzt werden. Der pKs-Wert der Säure sollte nicht negativ sein, da es sonst zur Equilibrierung des Siloxangrundgerüsts kommt.

Eine besonders bevorzugte Ausführungsform der Erfindung besteht in der Verwendung von katalytischen Systemen, bestehend aus einer 1 : 1 Mischung aus einer Carbonsäure und ihrem Metalloder Ammoniumsalz, wobei das Metall ein Hauptgruppenelement oder Übergangsmetall, besonders bevorzugt ein Metall der 1. und 2. Hauptgruppe ist. Der organische Rest der Carbonsäure ist ausgewählt aus cyclischen, linearen oder verzweigten, gesättigten, ein- oder mehrfach ungesättigten Alkyl-, Aryl-, Alkylaryl- oder Arylalkylresten mit 1 bis 40, insbesondere 1 bis 20 Kohlenstoffatomen, Halogenalkylgruppen mit 1 bis 40 Kohlenstoffatomen, hydroxy-, carboxy- oder alkoxysubstituierten Alkyl-, Aryl-, Alkylaryl- oder Arylalkylresten mit 1 bis 40 Kohlenstoffatomen.

Insbesondere sind solche Systeme bevorzugt, deren Carbonsäure ausgewählt ist aus:

Ameisensäure, Essigsäure, Propionsäure, Buttersäure, Valeriansäure, Capronsäure, Önanthsäure, Caprylsäure, Pellargonsäure, Caprinsäure, Undecansäure, Laurinsäure, Myristinsäure, Palmitinsäure, Stearinsäure, Arachinsäure, Behensäure, Cyclopentancarbonsäure, Cyclohexancarbonsäure, Acrylsäure, Methacrylsäure, Vinylessigsäure, Crotonsäure, 2-/3-/4-Pentensäure, 2-/3-/4-/5-Hexensäure, Lauroleinsäure, Myristoleinsäure, Palmitoleinsäure, Ölsäure, Gadoleinsäure, Sorbinsäure, Linolsäure, Linolensäure, Pivalinsäure, Ethoxyessigsäure, Phenylessigsäure, Milchsäure, Hydroxycapronsäure, 2-Ethylhexansäure, Oxalsäure, Malonsäure, Bernsteinsäure, Äpfelsäure, Weinsäure, Citronensäure, Glutarsäure, Adipinsäure, Pimelinsäure, Korksäure, Azelainsäure, Sebacinsäure, Benzoesäure, o-/m-/p-Tolylsäure, Salicylsäure, 3-/4-Hydroxybenzoesäure, Phthalsäuren, oder deren ganz oder teilweise hydrierten Derivaten wie Hexahydro- oder Tetrahydrophthalsäure, oder Gemischen derselben.

Die Umsetzung der endständigen und/oder seitenständigen Si-H-funktionellen Siloxane mit den zuvor definierten Alkoholen mit Mischungen aus mindestens einer Säure und mindestens einem Salz einer Säure werden nach der allgemeinen Synthesevorschrift durchgeführt:

Der Alkohol wird mit oder ohne Lösungsmittel und dem Katalysator (Mischungen aus mindestens einer Säure und mindestens einem Salz einer Säure) vorgelegt und auf 70 °C bis 150 °C erhitzt. Anschließend wird das Si-H-funktionelle Siloxan zugetropft und die Reaktionsmischung bis zur vollständigen Umsetzung gerührt. Die Reaktionsführung kann dahin modifiziert werden, dass eine Eintopfreaktion durchgeführt wird, gekennzeichnet dadurch, dass der Alkohol, der Katalysator und das Si-H-funktionelle Siloxan mit oder ohne Lösungsmittel vorlegt werden.
Des Weiteren können diese Umsetzungen unter Verwendung von Schutzgas, Magerluft oder Inhibitoren durchgeführt werden.

Folglich konnten in dem Bestreben die Nachteile des Standes der Technik zu überwinden Verfahren bereitgestellt werden, welche die Herstellung von endständig via SiOC-Chemie (meth)acrylatmodifizierten Polysiloxanen ermöglichen, die eine ausgezeichnete Hydrolysestabilität der SiOC-Bindung aufweisen. Ferner konnten, nach dem bisherigen Stand der Technik via SiOC-Chemie nicht zugängliche mittelständig (meth)acrylierte Polysiloxane dargestellt werden. Die Verfahren ermöglichen außerdem die Herstellung von gemischt end- und seitenständig via SiOC-Chemie modifizierten (meth)acrylierten Polysiloxanen.

Die erfindungsgemäßen via SiOC-Chemie modifizierten (meth)acrylierten Polysiloxane können in einer einzigen Synthesestufe in unterschiedlichen Kettenlängen und/oder Modifizierungsarten hergestellt werden, da die Herstellung ohne den Abbau des Siloxangrundgerüsts erfolgt.
Für maßgeschneiderte Produkte ist es ferner möglich, dass vor der Umsetzung der Alkohole mit den Si-H-Siloxanen unter Verwendung der lewissauren, insbesondere der Bor-Katalysatoren oder der Mischungen aus mindestens einer Säure und mindestens einem Salz einer Säure eine beliebige andere Reaktion mit dem Si-H-Siloxan durchgeführt wird, hierbei im speziellen eine Hydrosilylierung.

Mischungen verschiedener erfindungsgemäßer Polysiloxane, die erst nach getrennter Herstellung miteinander gemischt werden, sind ebenfalls möglich.

Einzelne oder Mischungen von erfindungsgemäßen via SiOC-Chemie modifizierten (meth)acrylierten Polysiloxanen können in beliebiger Mischung mit beliebig vielen anderen (meth)acrylierten Polysiloxanen nach dem Stand der Technik gemischt werden. Auch Mischungen mit epoxyhaltigen oder vinyletherhaltigen UV-härtenden Siliconen sind möglich.

Des Weiteren können die erfindungsgemäßen via SiOC-Chemie modifizierten (meth)acrylierten Polysiloxane oder die genannten Mischungen mit weiteren Hilfs- und Zusatzstoffen nach dem Stand der Technik gemischt werden. Hier sind insbesondere Photoinitiatoren, Haftvermittler, Härtungsbeschleuniger, Photosensibilatoren, Antioxidationsmittel, Sauerstofffänger oder organische (meth)acrylgruppenhaltige oder vinylethergruppenhaltige Verbindungen zu nennen. Zusatzstoffe sind des Weiteren Farbstoffe, Pigmente sowie feste teilchenförmige Füllstoffe.

Die erfindungsgemäßen via SiOC-Chemie modifizierten (meth)acrylierten Polysiloxane oder die genannten Mischungen können zur Beschichtung von Formkörpern und flächigen Trägern zur Herstellung von zum Beispiel abhäsiven Beschichtung verwendet werden. Sie werden durch freie Radikale vernetzt und härten unter Einfluss von
- Wärme, nach Zugabe von beispielsweise geeigneten thermisch zersetzender Peroxide, oder
- Strahlung wie Licht und UV-Licht, nach Zugabe geeigneter Photoinitiatoren, oder
- Elektronenstrahlen
innerhalb kürzester Zeit zu mechanisch und chemisch widerstandsfähigen abhäsiven Schichten aus.

### Beispiele:

Nachfolgende Beispiele sollen zur Verdeutlichung der Erfindung dienen, sie stellen jedoch keinerlei Einschränkung dar.

### Anwendungstechnische Überprüfung:

Zur Überprüfung der anwendungstechnischen Eigenschaften der härtbaren Beispiele und Mischungen der Beispiele werden sie nach Zugabe von 2 % des Photoinitiators Darocur 1173 der Ciba Specialty auf flächige Träger (orientierte Polypropylenfolie) aufgetragen und durch Einwirkung von UV-Licht einer dem Stand der Technik entsprechenden Mitteldruckquecksilberdampflampe mit einer UV-Leistung von 50 W/cm unter Stickstoffinertisierung mit kontrolliertem Restsauerstoffgehalt von < 50 ppm bei einer Bahngeschwindigkeit vom 20 m/min gehärtet. Die Auftragsmenge beträgt in jedem Fall ca. 1 g/m².

### Trennwert:

Für die Ermittlung der Trennwerte wird ein 25 mm breites Klebeband, dass mit einem Kautschukleber beschichtet ist und als TESA® 7476 im Handel von der Firma Beiersdorf erhältlich ist, verwendet.

Zur Messung der Abhäsivität werden diese Klebebänder auf den Untergrund aufgewalzt und anschließend bei 40 °C unter einem Gewicht von 70 g/cm² gelagert. Nach 24 Stunden wird die Kraft gemessen, die benötigt wird, um das jeweilige Klebeband mit einer Geschwindigkeit von 30 cm/min unter einem Schälwinkel von 180 ° vom Untergrund abzuziehen. Diese Kraft wird als Trennkraft oder Trennwert bezeichnet. Die allgemeine Testprozedur entspricht im Wesentlichen der Testmethode Nr. 10 der "Fédération Internationale des Fabricants et Transformateurs D'Adhésifs et Thermocollants sur Papier et autres Supports" (FINAT).

### Loop-Test:

Der Loop-Test dient zur schnellen Ermittlung des Härtungsgrades einer Trennbeschichtung. Hierzu wird ein etwa 20 cm langer Streifen des Klebebandes TESA® 4154 der Firma Beiersdorf 3 mal auf den Untergrund aufgewalzt und sofort wieder von Hand abgezogen. Dann wird durch Zusammenlegen der Enden des Klebebandes eine Schlaufe gebildet, so dass die Klebeflächen beider Enden auf etwa einem Zentimeter Strecke Kontakt haben. Dann werden die Enden wieder von Hand auseinandergezogen, wobei die Kontaktfläche gleichmäßig zur Mitte des Klebebandes wandern sollte. Im Falle einer Kontamination mit schlecht ausgehärtetem Trennmaterial ist die Klebkraft des Klebebandes nicht mehr ausreichend, um die Kontaktfläche beim Auseinanderziehen der Enden zusammenzuhalten. In diesem Falle gilt der Test als nicht bestanden.

### Restklebkraft:

Die Bestimmung der Restklebkraft erfolgt weitestgehend gemäß der FINAT Testvorschrift Nr. 11. Hierzu wird das Klebeband TESA® 7475 der Firma Beiersdorf auf den Untergrund gewalzt und anschließend bei 40 °C unter einem Gewicht von 70 g/cm² gelagert. Nach 24 Stunden wird das Klebeband vom Trennsubstrat getrennt und auf einen definierten Untergrund (Stahlplatte, Glasplatte, Folie) aufgewalzt. Nach einer Minute wird die Kraft gemessen, die benötigt wird, um das Klebeband mit einer Geschwindigkeit von 30 cm/min unter einem Schälwinkel von 180 ° vom Untergrund abzuziehen. Der so gemessene Wert wird durch den Wert geteilt, den ein unbehandeltes Klebeband unter ansonsten gleichen Testbedingungen ergibt. Das Ergebnis wird als Restklebkraft bezeichnet und in der Regel in Prozent angegeben. Werte über 80 % gelten dem Fachmann als ausreichend und sprechen für eine gute Aushärtung.

### Rub Off:

Der Rub Off Test dient zur schnellen Ermittlung der Haftung der Beschichtung zum Untergrund. Hierzu wird auf einer Stelle der Beschichtung in 10 kleinen Kreisbewegungen mit dem Finger bei gleichem Druck gerieben. Der Rub Off Test wird nur auf gut ausgehärteten Beschichtungen durchgeführt. Er gilt als bestanden, wenn keine Siliconbestandteile abgerieben werden können.

### Strahlenhärtende Organosiliziumverbindungen:

### Beispiel 1:

Umsetzung von einem endständigen Si-H-funktionellen Siloxan (e = 7,2, R⁵ = H) mit 2-Hydroxyethylmethacrylat (HEMA) unter Verwendung eines Bor-haltigen Katalysators:

43,3 g 2-Hydroxyethylmethacrylat werden in einem Vierhalskolben, ausgestattet mit Rührer, Intensivkühler, Thermometer und Tropftrichter, zusammen mit 0,043 g Tris(pentafluorphenyl)boran als Katalysator, 500 ppm Methylhydrochinon, 500 ppm Phenothiazin und 77,3 g Toluol in inerter Atmosphäre auf 90 °C aufgeheizt. Bei Erreichen der Temperatur werden 111,3 g endständig Si-H-funktionalisiertes Polydimethylsiloxan (e = 7,2, R⁵ = H) der allgemeinen Formel HMe₂SiO(SiMe₂O)_{7.2}SiMe₂H innerhalb von 20 Minuten zugetropft. Nach beendeter Zugabe und Abkühlen lag der Umsatz entsprechend der SiH-Wert Methode bei 100 %. Nach der Abdestillation der flüchtigen Verbindungen erhält man eine wasserklare, farblose Flüssigkeit, die laut ¹Hund ²⁹Si-NMR-Spektren der allgemeinen Formel 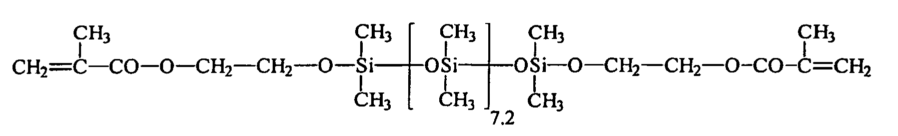 zukommt.

### Beispiel 2:

### Umsetzung von einem endständigen Si-H-funktionellen Siloxan (e = 7,2, R⁵ = H) mit 2-Hydroxyethylacrylat (HEA) unter Verwendung eines Bor-haltigen Katalysators:

46 g 2-Hydroxyethylacrylat werden in einem Vierhalskolben, ausgestattet mit Rührer, Intensivkühler, Thermometer und Tropftrichter, zusammen mit 0,051 g Tris(pentafluorphenyl)boran als Katalysator, 500 ppm Methylhydrochinon, 500 ppm Phenothiazin und 179,5 g Toluol in inerter Atmosphäre auf 90 °C aufgeheizt. Bei Erreichen der Temperatur werden 133,4 g endständig Si-H-funktionalisiertes Polydimethylsiloxan (e = 7,2, R⁵ = H) der allgemeinen Formel HMe₂SiO(SiMe₂O)_{7.2}SiMe₂H innerhalb von 15 Minuten zugetropft. Nach beendeter Zugabe und Abkühlen lag der Umsatz, entsprechend der SiH-Wert Methode bei 100 %.
Nach der Abdestillation der flüchtigen Verbindungen erhält man eine wasserklare, farblose Flüssigkeit, die laut ¹H- und ²⁹Si-NMR-Spektren der allgemeine Formel 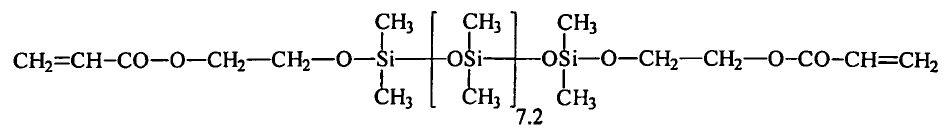 zukommt.

### Beispiel 3:

### Umsetzung von einem endständigen Si-H-funktionellen Siloxan (e = 7,2, R⁵ = H) mit 2-Hydroxypropylacrylat (HPA) unter Verwendung eines Bor-haltigen Katalysators:

27,3 g 2-Hydroxypropylacrylat werden in einem Vierhalskolben, ausgestattet mit Rührer, Intensivkühler, Thermometer und Tropftrichter, zusammen mit 0,039 g Tris(pentafluorphenyl)boran als Katalysator, 300 ppm Methylhydrochinon und 47 g Toluol in inerter Atmosphäre auf 90 °C aufgeheizt. Bei Erreichen der Temperatur werden 66,75 g endständig Si-H-funktionalisiertes Polydimethylsiloxan (e = 7,2, R⁵ = H) der allgemeinen Formel HMe₂SiO(SiMe₂O)_{7.2}SiMe₂H innerhalb von 15 Minuten zugetropft. Nach beendeter Zugabe und Abkühlen lag der Umsatz entsprechend der SiH-Wert Methode bei 100 %.
Nach der Abdestillation der flüchtigen Verbindungen erhält man eine wasserklare, farblose Flüssigkeit.

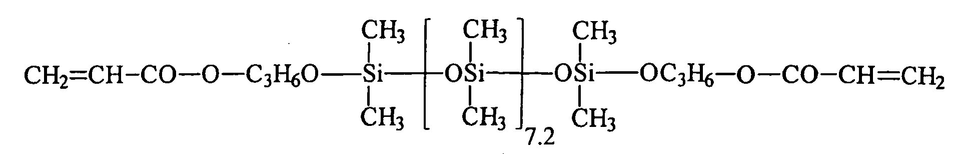

### Beispiel 4:

### Umsetzung von einem mittelständigen Si-H-funktionellen Siloxan (e = 13, g = 5, R⁵ = Me) mit 2-Hydroxyethylacrylat unter Verwendung eines Bor-haltigen Katalysators:

60,9 g 2-Hydroxyethylacrylat werden in einem Vierhalskolben, ausgestattet mit Rührer, Intensivkühler, Thermometer und Tropftrichter, zusammen mit 0,38 g Tris(pentafluorphenyl)boran als Katalysator, 300 ppm Methylhydrochinon und 102 g Toluol in inerter Atmosphäre auf 90 °C aufgeheizt. Bei Erreichen der Temperatur werden 142,8 g mittelständig Si-H-funktionalisiertes Polydimethylsiloxan (e = 13, g = 5, R⁵= Me) der allgemeinen Formel HMe₂SiO (SiMeHO)₅ (SiMe₂O)₁₃SiMe₂H (SiH-Wert: 0,353 %) innerhalb von 15 Minuten zugetropft. Nach beendeter Zugabe und Abkühlen lag der Umsatz, entsprechend der SiH-Wert Methode bei 100 %.
Nach der Abdestillation der flüchtigen Verbindungen erhält man eine farblose Flüssigkeit.

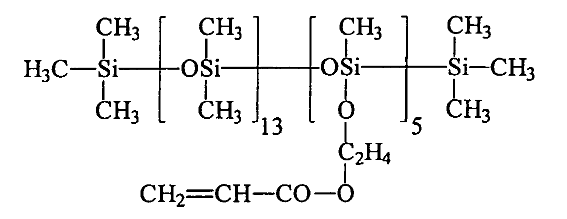

### Beispiel 5:

### Umsetzung von einem mittelständigen Si-H-funktionellen Siloxan (e = 200, g = 5, R⁵ - Me) mit 2-Hydroxyethylacrylat unter Verwendung eines Bor-haltigen Katalysators:

13,7 g 2-Hydroxyethylacrylat werden in einem Vierhalskolben, ausgestattet mit Rührer, Intensivkühler, Thermometer und Tropftrichter, zusammen mit 0,046 g Tris(pentafluorphenyl)boran als Katalysator, 300 ppm Methylhydrochinon und 154,6 g Toluol in inerter Atmosphäre auf 90 °C aufgeheizt. Bei Erreichen der Temperatur werden 295,5 g mittelständig Si-H-funktionalisiertes Polydimethylsiloxan (e = 200, g = 5, R⁵ = Me) der allgemeinen Formel HMe₂SiO (SiMeHO)₅(SiMe₂O)₂₀₀SiMe₂H (SiH-Wert: 0,031 %) innerhalb von 15 Minuten zugetropft. Nach beendeter Zugabe und Abkühlen lag der Umsatz, entsprechend der SiH-Wert Methode bei 100 %.
Nach der Abdestillation der flüchtigen Verbindungen erhält man eine farblose Flüssigkeit.

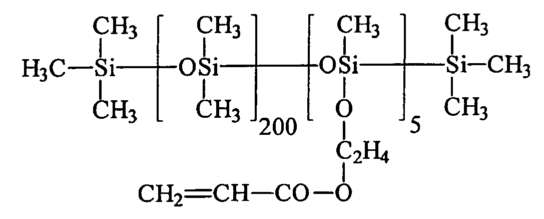

### Beispiel 6:

### Umsetzung von einem endständigen Si-H-funktionellen Siloxan (e = 18, R⁵ = H) mit 2-Hydroxyethylacrylat unter Verwendung eines Bor-haltigen Katalysators:

116,1 g 2-Hydroxyethylacrylat werden in einem Vierhalskolben, ausgestattet mit Rührer, Intensivkühler, Thermometer und Tropftrichter, zusammen mit 0,512 g Tris(pentafluorphenyl)boran als Katalysator, 300 ppm Methylhydrochinon und 526,6 g Toluol in inerter Atmosphäre auf 90 °C aufgeheizt. Bei Erreichen der Temperatur werden 725,1 g endständig Si-H-funktionalisiertes Polydimethylsiloxan (e = 18, R⁵ = H) der allgemeinen Formel HMe₂SiO(SiMe₂O)₁₈ₛSiMe₂H (SiH-Wert: 0,139 %) innerhalb von 15 Minuten zugetropft. Nach beendeter Zugabe und Abkühlen lag der Umsatz, entsprechend der SiH-Wert Methode bei 100 %.
Nach der Abdestillation der flüchtigen Verbindungen erhält man eine wasserklare, farblose Flüssigkeit.

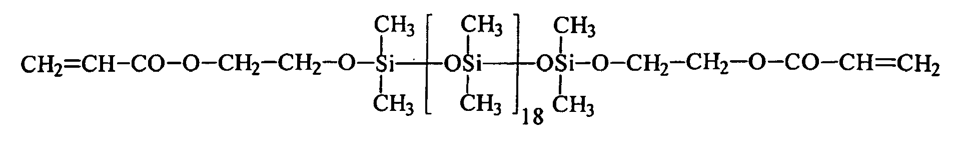

### Beispiel 7:

### Umsetzung von einem endständigen Si-H-funktionellen Siloxan (e = 98, R⁵ = H) mit 2-Hydroxyethylacrylat unter Verwendung eines Bor-haltigen Katalysators:

50,3 g 2-Hydroxyethylacrylat werden in einem Vierhalskolben, ausgestattet mit Rührer, Intensivkühler, Thermometer und Tropftrichter, zusammen mit 0,171 g Tris(pentafluorphenyl)boran als Katalysator, 300 ppm Methylhydrochinon und 256,6 g Toluol in inerter Atmosphäre auf 90 °C aufgeheizt. Bei Erreichen der Temperatur werden 1.233 g endständig Si-H-funktionalisiertes Polydimethylsiloxan (e = 98, R⁵ = H) der allgemeinen Formel HMe₂SiO(SiMe₂O) ₉₈SiMe₂H (SiH-Wert: 0,0272 %) innerhalb von 15 Minuten zugetropft. Nach beendeter Zugabe und Abkühlen lag der Umsatz, entsprechend der SiH-Wert Methode bei 100 %.
Nach der Abdestillation der flüchtigen Verbindungen erhält man eine wasserklare, farblose Flüssigkeit.

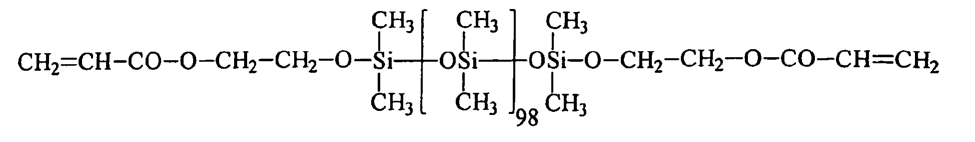

### Beispiel 8:

### Umsetzung von einem mittelständigen und endständigen Si-H-funktionellen Siloxan (e = 166, g = 10, R⁵ = H) mit 2-Hydroxyethylacrylat unter Verwendung eines Bor-haltigen Katalysators:

15,7 g 2-Hydroxyethylacrylat werden in einem Vierhalskolben, ausgestattet mit Rührer, Intensivkühler, Thermometer und Tropftrichter, zusammen mit 0,053 g Tris(pentafluorphenyl)boran als Katalysator, 300 ppm Methylhydrochinon und 83,4 g Toluol in inerter Atmosphäre auf 90 °C aufgeheizt. Bei Erreichen der Temperatur werden 123,3 g endständig und mittelständig Si-H-funktionalisiertes Polydimethylsiloxan (e = 166, g = 10, R⁵ = H) der allgemeinen Formel HMe₂SiO(SiMeHO)₁₀(SiMe₂O)₁₆₆SiMe₂H (SiH-Wert: 0,081 %) innerhalb von 15 Minuten zugetropft. Nach beendeter Zugabe und Abkühlen lag der Umsatz, entsprechend der SiH-Wert Methode bei 100 %.
Nach der Abdestillation der flüchtigen Verbindungen erhält man eine farblose, leicht trübe Flüssigkeit.

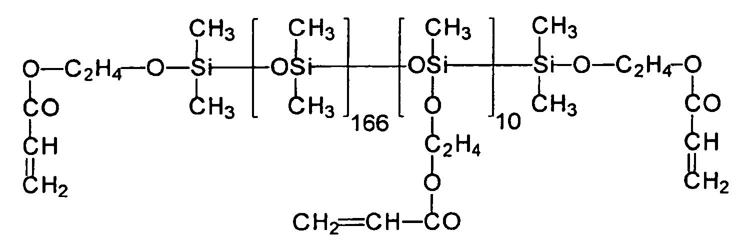

### Beispiel 9:

### Umsetzung von einem endständigen Si-H-funktionellen Siloxan (e = 98, R⁵ = H) mit Pentaerithritoltriacrylat (PETTriA) unter Verwendung eines Bor-haltigen Katalysators:

99,5 g Pentaerithritoltriacrylat werden in einem Vierhalskolben, ausgestattet mit Rührer, Intensivkühler, Thermometer und Tropftrichter, zusammen mit 0,085 g Tris(pentafluorphenyl)boran als Katalysator, 500 ppm Methylhydrochinon und 616,5 g Toluol in inerter Atmosphäre auf 90 °C aufgeheizt. Bei Erreichen der Temperatur werden 616,5 g endständig Si-H-funktionalisiertes Polydimethylsiloxan (e = 98, R⁵ = H) der allgemeinen Formel HMe₂SiO(SiMe₂O)₉₈SiMe₂H (SiH-Wert: 0,0272 %) innerhalb von 30 Minuten zugetropft. Nach beendeter Zugabe und Abkühlen lag der Umsatz, entsprechend der SiH-Wert Methode bei 100 %.
Nach der Abdestillation der flüchtigen Verbindungen erhält man eine farblose Flüssigkeit.

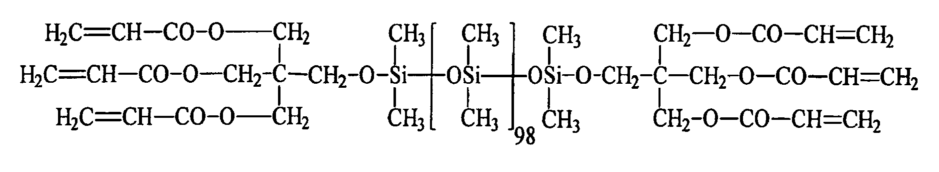

### Beispiel 10:

### Umsetzung von einem endständigen Si-H-funktionellen Siloxan (e = 7,2, R⁵ = H) mit Hydroxyethylacrylat(HEA) unter Verwendung von einer katalytischen Mischung, bestehend aus Cäsiumlaurat/Laurinsäure:

25,6 g HEA werden in einem Vierhalskolben, ausgestattet mit Rührer, Intensivkühler, Thermometer und Tropftrichter, zusammen mit 2,9 g Cäsiumlaurat/Laurinsäure als Katalysator, 500 ppm Methylhydrochinon und 500 ppm Phenothiazin auf 120 °C aufgeheizt. Nach einer Stunde werden 66,7 g endständig Si-H-funktionalisiertes Polydimethylsiloxan (e = 7,2, R⁵ = H) der allgemeinen Formel HMe₂SiO(SiMe₂O)_{7.2}SiMe₂H innerhalb von 30 min zugetropft und für weitere 6 h bei 120 °C gerührt. Der Umsatz entsprechend der SiH-Wert Methode wurde mit 99,4 % bestimmt und der Katalysator durch einfache Filtration über einen Faltenfilter entfernt.

Nach der Abdestillation der flüchtigen Reaktionsnebenprodukte erhält man eine klare, gelbe Flüssigkeit, die laut ¹H- und ²⁹Si-NMR-Spektren der allgemeinen Formel 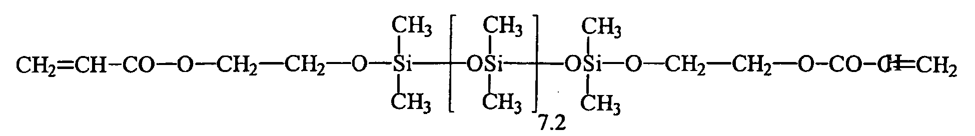 zukommt.

### Beispiel 11:

### Umsetzung von einem endständigen Si-H-funktionellen Siloxan (e = 18, R⁵ = H) mit einem acrylierten Polyether (Bisomer® PEA 6, Firma Cognis) unter Verwendung eines Bor-haltigen Katalysators:

328,1 g Bisomer PEA 6 werden in einem Vierhalskolben, ausgestattet mit Rührer, Intensivkühler, Thermometer und Tropftrichter, zusammen mit 0,512 g Tris(pentafluorphenyl)boran als Katalysator, 500 ppm Methylhydrochinon, 500 ppm Phenothiazin und 526,6 g Toluol in inerter Atmosphäre auf 90 °C aufgeheizt. Bei Erreichen der Temperatur werden 725,1 g endständig Si-H-funktionalisiertes Polydimethylsiloxan (e = 18, R⁵ = H) der allgemeinen Formel HMe₂SiO(SiMe₂O)₁₈SiMe₂H (SiH-Wert: 0,139 %) innerhalb von 15 Minuten zugetropft. Nach beendeter Zugabe und Abkühlen lag der Umsatz, entsprechend der SiH-Wert Methode bei 100 %.
Nach der Abdestillation der flüchtigen Verbindungen erhält man eine wasserklare, farblose Flüssigkeit.

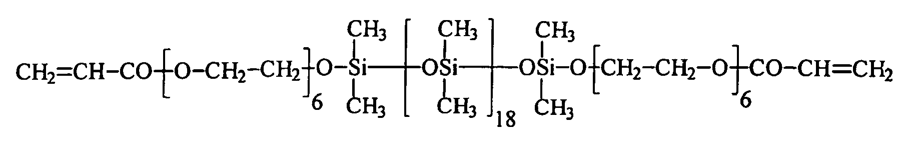

### Vergleichsbeispiel 12:

### Umsetzung von einem endständigen Si-C1-funktionellen Siloxan (n = 100) mit Pentaerithritoltriacrylat unter Verwendung von Triethylamin:

29,8 g Pentaerithritoltriacrylat werden in einem Vierhalskolben, ausgestattet mit Rührer, Intensivkühler, Thermometer und Tropftrichter, zusammen mit 500 ppm Methylhydrochinon und 500 ppm Phenothiazin in inerter Atmosphäre auf 90 °C aufgeheizt. Bei Erreichen der Temperatur werden 327,8 g endständig Si-Cl-funktionalisiertes Polydimethylsiloxan (e = 98, R⁵ = Cl) der allgemeinen Formel ClMe₂SiO(SiMe₂O)₉₈SiMe₂Cl innerhalb von 30 Minuten zugetropft und die dabei entstehende HCl durch Anlegen von Vakuum abgezogen. Nach 1 h Reaktionszeit wurde mit Triethylamin neutralisiert, mit Toluol das Umsetzungsprodukt verdünnt und filtriert. Nach der Abdestillation der flüchtigen Verbindungen erhält man eine leicht gelbe Flüssigkeit.

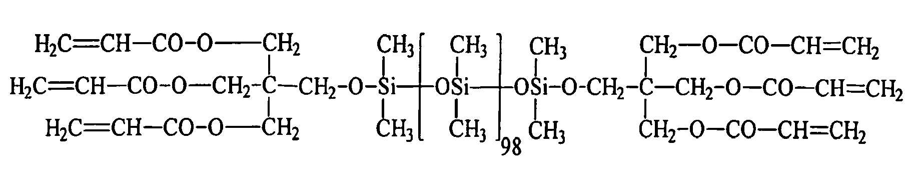

### Vergleichsbeispiel 13:

### Umsetzung von einem endständigen Si-Cl-funktionellen Siloxan (n = 20) mit 2-Hydroxyethylacrylat unter Verwendung von Triethylamin:

23,2 g 2-Hydroxyethylacrylat werden in einem Vierhalskolben, ausgestattet mit Rührer, Intensivkühler, Thermometer und Tropftrichter, zusammen mit 500 ppm Methylhydrochinon und 500 ppm Phenothiazin in inerter Atmosphäre auf 90 °C aufgeheizt. Bei Erreichen der Temperatur werden 116 g endständig Si-Cl-funktionalisiertes Polydimethylsiloxan (e = 18, R⁵ = Cl) der allgemeinen Formel ClMe₂SiO(SiMe₂O)₁₈SiMe₂Cl innerhalb von 30 Minuten zugetropft und die dabei entstehende HCl durch Anlegen von Vakuum abgezogen. Nach 1 h Reaktionszeit wurde mit Triethylamin neutralisiert, mit Toluol das Umsetzungsprodukt verdünnt und filtriert. Nach der Abdestillation der flüchtigen Verbindungen erhält man eine leicht gelbe Flüssigkeit.

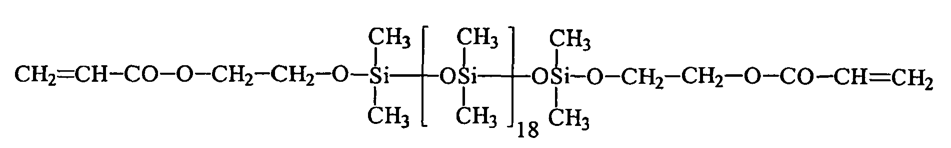

### Vergleichsbeispiel 14:

Als Vergleichsbeispiel eines Organopolysiloxans, bei denen die acrylsäureesterhaltigen organischen Gruppen über endständige Si-C-Bindungen mit dem Polysiloxangerüst verbunden sind, wird TEGO® RC 706 der Firma Goldschmidt (gemäß DE-A-38 20 294) verwendet.

### Vergleichsbeispiel 15:

Als weiteres Vergleichsbeispiel eines Organopolysiloxans, bei denen die acrylsäureesterhaltigen organischen Gruppen über endständige Si-C-Bindungen mit dem Polysiloxangerüst verbunden sind, wird PC 911 der Firma Rhodia (gemäß DE-A-38 20 294) verwendet.

### Vergleichsbeispiel 16:

Als weiteres Vergleichsbeispiel eines Organopolysiloxans, bei denen die acrylsäureesterhaltigen organischen Gruppen über Si-C-Bindungen mit dem Polysiloxangerüst verbunden sind, hat TEGO® RC 902 (gemäß US-6 211 322) in der gehärteten Beschichtung eine sehr gute abhäsive Wirkung gegen klebende Substanzen. Der Gehalt an zur Polymerisation befähigten Doppelbindungen ist sehr gering. TEGO® RC 902 wird zur Verbesserung der Haftung zum Untergrund mit TEGO® RC 711 (gemäß DE-A-38 20 294) abgemischt. Als Vergeichsbeispiel 16 wurde eine Mischung RC 902/ RC 711 70 : 30 eingesetzt.

### Vergleichsbeispiel 17:

Als weiteres Vergleichsbeispiel eines Organopolysiloxans, bei denen die acrylsäureesterhaltigen organischen Gruppen über Si-C-Bindungen mit dem Polysiloxangerüst verbunden sind, wird eine besonders langkettige aber hochfunktionalisierte Verbindung, gemäß US-6 211 322 hergestellt, verwendet. Diese Verbindung wurde von Goldschmidt als Versuchsprodukt bezogen und hat nach ¹H- und ²⁹Si -NMR-Spektren eine Kettenlänge von etwa 400 Siloxaneinheiten mit endständiger Funktionalität mit mehr als einer Acrylatgruppe pro Kettenende.

Die erfindungsgemäßen Beispiele 1 bis 11 sowie die ebenfalls über SiOC-Bindungen funktionalisierten Beispiele 12 und 13 sind in der folgenden Tabelle nochmals zusammengefasst.

| Beispiel | R³H = | R² = | a | c |
|---|---|---|---|---|
| 1 | HEMA | R³ | 7 , 2 | 0 |
| 2 | HEA | R³ | 7 , 2 | 0 |
| 3 | HPA | R³ | 7 , 2 | 0 |
| 4 | HEA | R¹ | 13 | 5 |
| 5 | HEA | R¹ | 200 | 5 |
| 6 | HEA | R³ | 18 | 0 |
| 7 | HEA | R³ | 98 | 0 |
| 8 | HEA | R³ | 166 | 10 |
| 9 | PETTriA | R³ | 98 | 0 |
| 10 | HEA | R³ | 7,2 | 0 |
| 11 | Bisomer® PEA 6 | R³ | 18 | 0 |
| 12 | PETTriA | R³ | 98 | 0 |
| 13 | HEA | R³ | 18 | 0 |

Die Beispiele 1 bis 15 wurden für sich genommen wie unter "Anwendungstechnische Prüfung" beschrieben getestet. Beispiel 16 wurde in der angegebenen Mischung getestet. Die Ergebnisse (Trennwert, Loop Test, Rub Off und Restklebkraft wie beschrieben durchgeführt) sind in der folgenden Tabelle zusammengefasst:

| Beispiel | Trennwert TESA 7476 [cN/inch] | LOOP-Test bestanden ja/nein | Restklebkraft [%] | Rub Off bestanden ja/nein |
|---|---|---|---|---|
| 1 | 50 | nein | 50 | nA |
| 2 | 210 | ja | 96 | ja |
| 3 | 223 | ja | 93 | ja |
| 4 | 350 | ja | 92 | ja |
| 5 | 35 | ja | 84 | nein |
| 6 | 163 | ja | 92 | ja |
| 7 | 55 | ja | 93 | nein |
| 8 | 49 | ja | 88 | nein |
| 9 | 55 | ja | 96 | nein |
| 10 | 229 | ja | 96 | ja |
| 11 | 152 | ja | 90 | ja |
| 12 | 52 | ja | 79 | nein |
| 13 | 145 | ja | 82 | ja |
| 14 | 160 | ja | 95 | ja |
| 15 | 60 | ja | 69 | nein |
| 16 | 45 | ja | 93 | ja |
| 17 | 30 | nein | 50 | nA |

| | | | | |
|---|---|---|---|---|
| nA: nicht anwendbar | | | | |

Aus der anwendungstechnischen Prüfung geht hervor, dass vergleichbare Siloxangrundstrukturen vergleichbare Eigenschaften aufweisen, unabhängig ob die Funktionalisierung über SiC oder SiOC vorgenommen wurden (z. B. Beispiel 3, 6, 11 und 14).

Desweiteren wurden Mischungen der erfindungsgemäßen Beispiele hergestellt und wie zuvor getestet:

| Mischung Beispiel | Trennwert TESA 7476 [cN/inch] | LOOP-Test bestanden ja/nein | Restklebkraft [%] | Rub Off bestanden ja/nein |
|---|---|---|---|---|
| 2/5 30 : 70 % | 42 | ja | 85 | ja |
| 4/5 30 : 70 % | 48 | ja | 86 | ja |
| 4/8/5 30 : 50 : 20 % | 45 | ja | 89 | ja |
| 4/8/5 30 : 65 : 5 % | 53 | ja | 96 | ja |
| 4/9 30 : 70 % | 53 | ja | 92 | ja |
| 4/15 30 : 70 % | 63 | ja | 96 | ja |
| 5/8/17 30 : 67 : 3 % | 35 | ja | 96 | ja |

Aus der anwendungstechnischen Prüfung der Mischungen geht hervor, dass durch Kombination unterschiedlicher Kettenlängen und Modifizierungsarten von end- und/oder seitenständigen modifizierten (meth)acrylierten Polysiloxanen sehr gute Eigenschaften erreicht werden können. Die Eigenschaften sind vergleichbar denen, wie sie im Stand der Technik derzeit Massstab sind (Vergleichsbeispiel 16).

Die Notwendigkeit der Mischung der erfindungsgemäßen Verbindungen kann dadurch vermieden werden, dass Mischungen der entsprechenden SiH-funktionellen Siloxangrundstrukturen gemeinsam in einem Reaktionsschritt umgesetzt werden. Dies ist deshalb möglich, da kein Abbau der Siloxangrundstrukturen erfolgt.

Desweiteren kann die Abmischung von nicht erfindungsgemäßen mit erfindungsgemäßen Verbindungen Vorteile ergeben (vergleiche Beispiel 15 mit der Mischung aus Beispiel 4 und 15). Dadurch können, wie gezeigt, die Haftungseigenschaften verbessert werden.

Darüber hinaus können Mischungen der preiswert herstellbaren erfindungsgemäßen Verbindungen zusätzlich mit zumeist geringen Mengen, beispielsweise 1 bis 20 %, von sehr langkettigen aber hochfunktionalisierten Verbindungen, hergestellt gemäß US-6 211 322, abgemischt werden. Dadurch ergeben sich besonders abhäsive Trennbeschichtungen mit sehr guter Langzeitstabilität und sehr gleichmäßigen Trennverhalten ohne erhöhten Trennwertpeak beim Starten des Trennvorganges und geringer Variation des Trennwertes während des Trennvorganges (auch Zipp genannt)(Mischung aus Beispielen 5/8/17 30 : 67 : 3 %).

## Patentansprüche

1. Organopolysiloxane mit über SiOC-Gruppen mittel- und endständig oder nur mittelständig gebundene (Meth)-acrylsäureester tragende Gruppen der allgemeinen durchschnittlichen Formel (I) 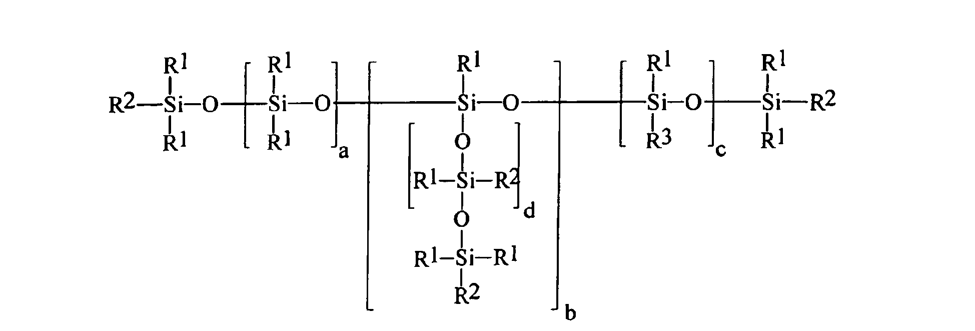 worin bedeuten
R¹ gleiche oder verschiedene Reste, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen,
R² gleiche oder verschiedene Reste R¹ oder R³,
R³ gleiche oder verschiedene einfach oder mehrfach (meth)acrylierte Monoalkoxylate oder (meth)acrylierte Polyalkoxylate, oder eine Mischung der einfach oder mehrfach (meth)acrylierten Monoalkoxylate oder Polyalkoxylate mit beliebigen anderen Alkoxylaten, die ausgewählt sind aus der Gruppe der linearen oder verzweigten, gesättigten, ein- oder mehrfach ungesättigten, aromatischen, aliphatisch-aromatischen Mono- oder Polyalkohole, Polyethermonoalkohole, Polyetherpolyalkohole, Polyestermonoalkohole, Polyesterpolyalkohole, Aminoalkohole, insbesondere N-Alkyl-, Arylamino-Ethylenoxyd-, -Propylenoxyd-Alkohole, N-Alkyl- oder Arylaminoalkoxylate sowie deren Gemischen, wobei das Verhältnis der einfach oder mehrfach (meth)acrylierten Monoalkoxylate oder Polyalkoxylate zu den beliebigen anderen Alkoxylaten so gewählt wird, dass mindestens ein einfach oder mehrfach (meth)acrylierter Monoalkoxylat- oder Polyalkoxylat-Rest in dem Organopolysiloxan enthalten ist,
a 0 bis 1.000,
b 0 bis 5,
c 1 bis 200,
d 0 bis 1.000
ist.

2. Verfahren zur Herstellung von Organopolysiloxanen mit über SiOC-Gruppen mittel- und/oder endständig gebundenen (Meth)acrylsäurestergruppen durch Umsetzung von SiH-Gruppen enthaltenden Polysiloxanen der allgemeinen durchschnittlichen Formel (II) 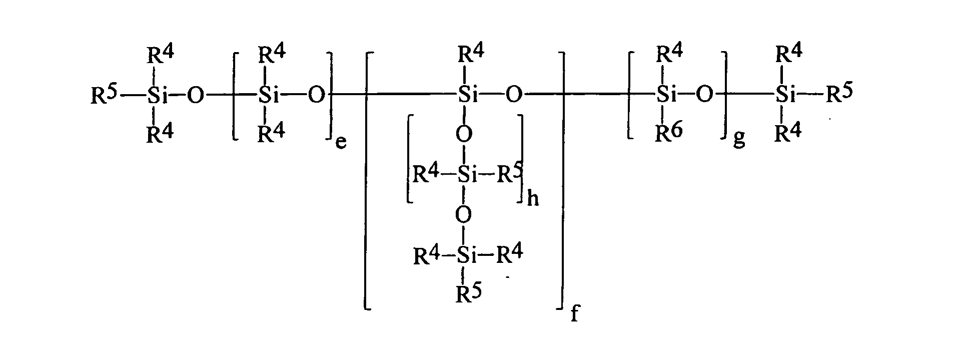 in denen
R⁴ gleiche oder verschiedene Reste sind, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen,
R⁵ H oder R⁴,
R⁶ H,
mit der Maßgabe, dass mindestens einer der Reste R⁵ oder R⁶ Wasserstoff ist,
e 0 bis 1.000,
f 0 bis 5,
g 0 bis 200,
h 0 bis 1.000 sind,
mit einem Alkohol, der ausgewählt ist aus der Gruppe der einfach oder mehrfach (meth)acrylierten Monoalkohole oder Polyalkohole, oder aus Mischungen der einfach oder mehrfach (meth)acrylierten Monoalkohole oder Polyalkohole mit beliebigen anderen Alkoholen, die ausgewählt sind aus der Gruppe der linearen oder verzweigten, gesättigten, ein- oder mehrfach ungesättigten, aromatischen, aliphatisch-aromatischen Mono- oder Polyalkohole, Polyethermono- oder polyalkohole, Polyestermonoalkohole, Polyesterpolyalkohole, Aminoalkohole, insbesondere N-Alkyl-, Arylamino-Ethylenoxyd-, -Propylenoxid-Alkohole, N-Alkyl- oder Arylaminoalkohole sowie deren Gemischen, **dadurch gekennzeichnet, dass** man in einem oder mehreren Verfahrensschritten unter Einsatz eines lewissauren Katalysators oder eines Katalysators enthaltend eine Carbonsäure und deren Salze die vorhandenen SiH-Gruppen des Polysiloxans teilweise oder vollständig durch Alkoholatreste der eingesetzten Alkohole ersetzt.

3. Verfahren zur Herstellung von Organopolysiloxanen gemäß Anspruch 2, **dadurch gekennzeichnet, dass** als Katalysator mindestens eine Verbindung eingesetzt wird, die ausgesucht ist aus der Gruppe (C₅F₄) (C₆F₅)₂B; (C₅F₄)₃B; (C₆F₅)BF₂; BF(C₆F₅)₂; B(C₆F₅)₃; HCl₂(C₆F₅); BCl(C₆F₅)₂; B(C₆H₅)(C₆F₅)₂; B(Ph)₂(C₆F₅); [C₆H₄(mCF₃)]₃; [C₆H₄(pOCF₃)]₃B; (C₆F₅)B(OH)₂; (C₆F₅)₂BOH; (C₆F₅)₂BH; (C₆F₅)BH₂; (C₇H₁₁)B(C₆F₅)₂; (C₈H₁₄B)(C₆F₅); (C₆F₅)₂B(OC₂H₅); (C₆F₅)₂B-CH₂CH₂Si(CH₃)₃; 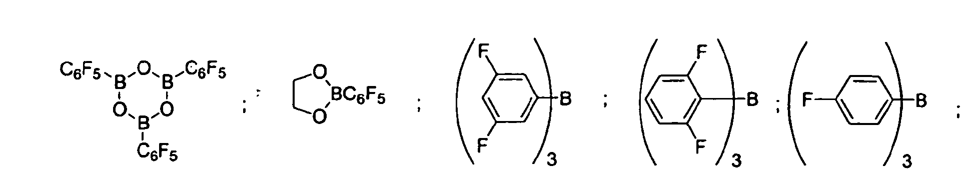 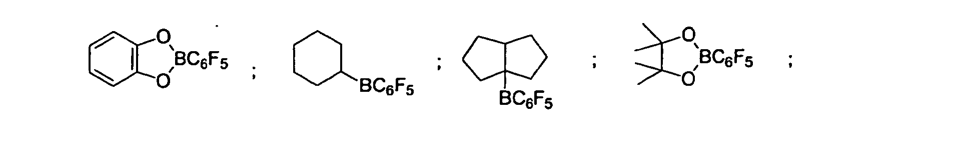 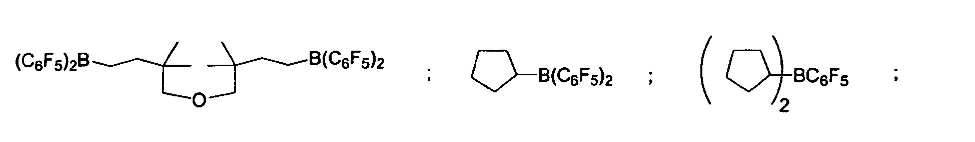 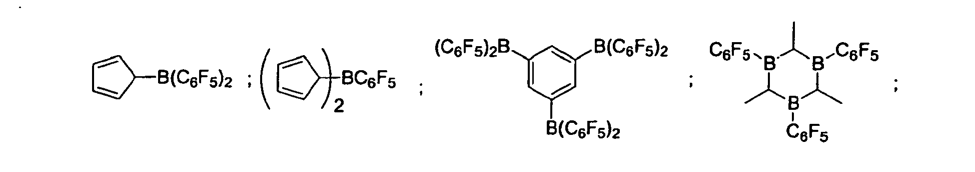 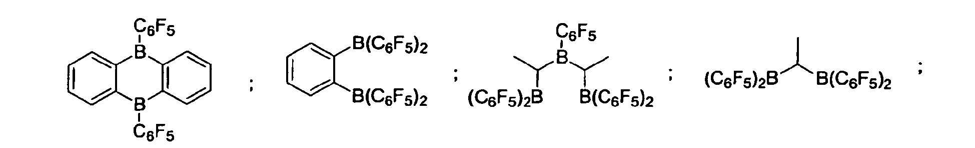 insbesondere Bortrifluorid-Etherat, Boran-Triphenylphosphinkomplex, Triphenylboran, Tris (Perfluortriphenylboran), Triethylboran und Bortrichlorid, Tris(pentafluorophenyl)-Boroxin (9CI), 4,4,5,5,-Tetramethyl-2-(pentafluorophenyl)-1,3,2-Dioxaborolane (9CI), 2-(Pentafluorophenyl)-1,3,2-Dioxaborolane (9CI), Bis(pentafluorophenyl)cyclohexyl-boran, Di-2,4-cyclopentadien-1-yl(pentafluorophenyl)-Boran (9CI), (Hexahydro-3a(1H)-pentalenyl)bis(pentafluorophenyl)boran (9CI), 1,3-[2-[Bis(pentafluorophenyl)boryl]ethyl]tetramethyl-disiloxan, 2,4,6-Tris(pentafluorophenyl)borazin (7CI, 8CI, 9CI), 1,2-Dihydro-2-(pentafluorophenyl)-1,2-azaborin (9CI), 2-(Pentafluorophenyl)-1,3,2-benzodioxaborol (9CI), Tris(4-trifluoromethoxyphenyl)boran, Tris(3-trifluoromethylphenyl) boran, Tris(4-fluorophenyl)boran, Tris(2,6-difluorophenyl)boran, Tris(3,5-difluorophenyl)boran sowie deren Gemische.

4. Verfahren zur Umsetzung von SiH-Gruppen enthaltenden Polysiloxanen nach den Ansprüchen 2 und/oder 3, **dadurch gekennzeichnet, dass** sowohl lösungsmittelfrei als auch unter Verwendung eines Lösungsmittels gearbeitet werden kann.

5. Verfahren nach mindestens einem der Ansprüchen 2 bis 4, **dadurch gekennzeichnet, dass** es sich um eine einstufige Synthese handelt.

6. Verfahren nach mindestens einem der Ansprüchen 2 bis 5, **dadurch gekennzeichnet, dass** als Alkohole 2-Hydroxyethyl(meth)acrylat, Hydroxypropyl(meth)acrylat, Hydroxybutyl(meth)acrylat, Hydroxypentyl(meth)acrylat, Hydroxyhexyl(meth)acrylat, Hydroxypolyether(meth)acrylat, Hydroxymonoester(meth)acrylsäureester, Hydroxypolyester-(meth)acrylsäureester, Pentaerythritoltri(meth)acrylat, Pentaerithritoldi(meth)acrylat und Propantrimethyloldi-(meth)acrylat oder Mischungen der zuvor erwähnten (meth)acrylierten und poly(meth)acrylierten Alkohole mit beliebigen anderen Alkoholen oder Polyolen verwendet werden.

7. Verfahren nach mindestens einem der Ansprüche 2 bis 6, **dadurch gekennzeichnet**, das α,ω-Polysiloxane mit f = 0, g = 0 und R⁵ = H verwendet werden.

8. Verfahren nach mindestens einem der Ansprüche 2 bis 7, **dadurch gekennzeichnet, dass** Mischungen verschiedener SiH-Polysiloxane mit den einfach oder mehrfach (meth)acrylierten Monoalkoholen oder Polyalkoholen, oder den Mischungen der einfach oder mehrfach (meth)acrylierten Monoalkoholen oder Polyalkoholen mit beliebigen anderen Alkoholen, die ausgewählt sind aus der Gruppe der linearen oder verzweigten, gesättigten, ein- oder mehrfach ungesättigten, aromatischen, aliphatisch-aromatischen Mono- oder Polyalkoholen, Polyethermonoalkoholen oder Polyetherpolyalkoholen, Polyestermonoalkoholen, Polyesterpolyalkoholen, Aminoalkoholen, insbesondere N-Alkyl-, Arylamino-EO-, -PO-Alkoholen, N-Alkyl- oder Arylaminoalkoholen sowie deren Gemischen umgesetzt werden.

9. Verfahren nach mindestens einem der Ansprüche 2 bis 8, **dadurch gekennzeichnet, dass** für Siloxanverbindungen mit endständigen oder mittelständigen (Meth)Acrylsäure-Gruppen anstelle der dortigen Katalysatoren als Katalysatoren Mischungen aus mindestens einer Säure und mindestens einem Salz einer Säure und mindestens einem Metall- oder Ammoniumsalz einer organischen Säure, wobei das Metallkation ein- oder mehrwertig sein kann, einsetzt.

10. Verfahren nach Anspruch 9, **dadurch gekennzeichnet, dass** als Katalysatoren Mischungen aus einer Carbonsäure, Dithiocarbonsäure, Aryl-/Alkylsulfonsäure, Aryl-/Alkylphosphonsäure oder Aryl-/Alkylsulfinsäure und mindestens einem Metall- oder Ammoniumsalz einer organischen Säure, wobei das Metallkation ein- oder mehrwertig sein kann, eingesetzt werden.

11. Verfahren nach mindestens einem der Ansprüche 2 bis 10, **dadurch gekennzeichnet, dass** vor der Umsetzung der Alkohole mit den Si-H-Siloxanen unter Verwendung der lewissauren-Katalysatoren oder der Mischungen aus mindestens einer Säure und mindestens einem Salz einer Säure eine beliebige andere Reaktion mit dem Si-H-Siloxan durchgeführt wird, hierbei im speziellen eine Hydrosilylierung.

12. Härtbare abhäsive Beschichtungmasse enthaltend mindestens eine Verbindung gemäß Anspruch 1.

13. Härtbare abhäsive Beschichtungmasse gemäß Anspruch 12, **dadurch gekennzeichnet, dass** gemischt end- und seitenständig modifizierte (meth)acrylierte Polysiloxane verwendet werden.

14. Härtbare abhäsive Beschichtungmasse gemäß den Ansprüchen 12 bis 13, **dadurch gekennzeichnet, dass** Mischungen unterschiedlicher Kettenlängen und Modifizierungsarten von end- und/oder seitenständig modifizierten (meth)acrylierten Polysiloxanen verwendet werden.

15. Härtbare abhäsive Beschichtungmasse gemäß den Ansprüchen 12 bis 14, **dadurch gekennzeichnet, dass** sie in einer einzigen Synthesestufe hergestellt wurden.

16. Härtbare abhäsive Beschichtungmasse gemäß den Ansprüchen 12 bis 15, **dadurch gekennzeichnet, dass** Mischungen aus modifizierten (meth)acrylierten Polysiloxanen mit anderen, nicht erfindungsgemäßen strahlenhärtenden Polysiloxanen verwendet werden.

17. Härtbare abhäsive Beschichtungmasse gemäß den Ansprüchen 12 bis 16, **dadurch gekennzeichnet, dass** Hilfs- und Zusatzstoffe nach dem Stand der Technik zugemischt werden, insbesondere ein oder mehrere ausgesucht aus der Gruppe der Photoinitiatoren, Haftvermittler, Härtungsbeschleuniger, Photosensibilatoren, Antioxidationsmittel, Sauerstofffänger, organische (meth)acrylgruppenhaltige oder organische vinylethergruppenhaltige Verbindungen sowie Farbstoffe, Pigmente oder feste teilchenförmige Füllstoffe.

18. Verwendung der härtbaren Beschichtungsmassen gemäß den Ansprüchen 12 bis 17 zur Beschichtung von Formkörpern und flächigen Trägern.

19. Abhäsive Beschichtung, hergestellt durch Härtung der härtbaren Beschichtungsmassen gemäß den Ansprüchen 12 bis 17.

20. Abhäsive Beschichtung gemäß Anspruch 19, **dadurch gekennzeichnet, dass** die Härtung durch Anwendung von Wärme oder Strahlung erfolgt.

## Claims

1. Organopolysiloxanes having groups which carry (meth)acrylic esters attached pendent and terminally or only pendent via SiOC groups, of the general average formula (I) 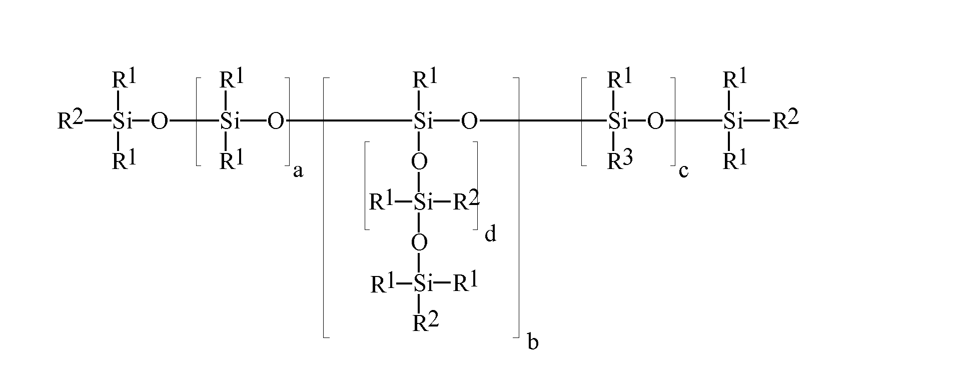 in which
R¹ radicals are identical or different and selected from linear or branched, saturated, mono- or polyunsaturated alkyl, aryl, alkaryl or aralkyl radicals having 1 to 20 carbon atoms,
R² radicals are identical or different radicals R¹ or R³,
R³ radicals are identical or different, singly or multiply (meth)acrylated monoalkoxylates or (meth)acrylated polyalkoxylates, or a mixture of the singly or multiply(meth)acrylated monoalkoxylates or polyalkoxylates with any desired other alkoxylates, selected from the group consisting of linear and branched, saturated, monounsaturated and polyunsaturated, aromatic, aliphatic-aromatic monoalcohols and polyalcohols, polyether monoalcohols, polyether polyalcohols, polyester monoalcohols, polyester polyalcohols, aminoalcohols, especially N-alkylamino- and arylamino-ethylene oxide- and propylene oxide alcohols, N-alkylamino and arylamino alkoxylates and also mixtures thereof, the ratio of the singly or multiply (meth)acrylated monoalkoxylates or polyalkoxylates to the arbitrary other alkoxylates being chosen such that at least one singly or multiply (meth)acrylated monoalkoxylate or polyalkoxylate radical is present in the organopolysiloxane,
a is 0 to 1,000,
b is 0 to 5,
c is 1 to 200,
d is 0 to 1,000.

2. Process for preparing organopolysiloxanes having (meth)acrylic ester groups attached pendent and/or terminally via SiOC groups by reacting a polysiloxane containing SiH groups and of the general average formula (II) 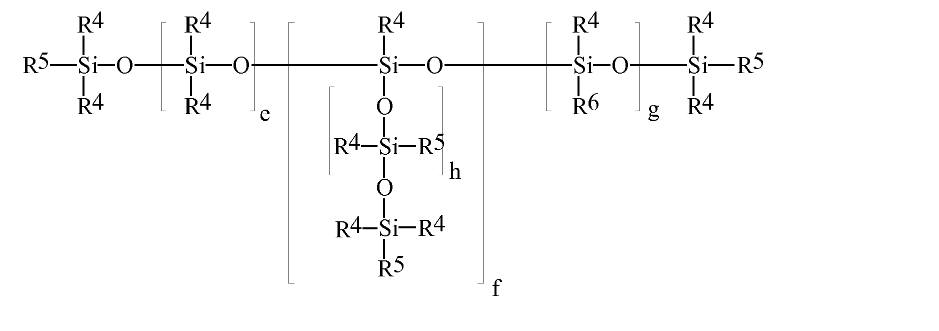 in which
R⁴ radicals are identical or different radicals selected from linear and branched, saturated, mono- and polyunsaturated alkyl, aryl, alkaryl and aralkyl radicals having 1 to 20 carbon atoms,
with the proviso that at least one of the radicals R⁵ or R⁶ is hydrogen,
R⁵ is H or R⁴,
R⁶ is H,
e is 0 to 1,000,
f is 0 to 5,
g is 0 to 200 and
h is 0 to 1,000,
with an alcohol selected from the group consisting of singly and multiply (meth)acrylated monoalcohols and polyalcohols, or of mixtures of singly or multiply (meth)acrylated monoalcohols or polyalcohols with any desired other alcohols selected from the group consisting of linear and branched, saturated, mono- and polyunsaturated, aromatic, aliphatic-aromatic monoalcohols and polyalcohols, polyether monoalcohols, polyether - polyalcohols, polyester monoalcohols, polyester polyalcohols, amino alcohols, especially N-alkylamino- and N-arylamino-EO and -PO alcohols, N-alkylamino and N-arylamino alcohols and also mixtures thereof, **characterized in that** some or all of the existing SiH groups of the polysiloxane are replaced in one or more process steps, using a Lewis-acidic catalyst or a catalyst composed of a carboxylic acid and salts of carboxylic acids, by alkoxide radicals of the alcohols employed.

3. Process for preparing organopolysiloxanes according to Claim 2, **characterized in that** use is made as catalyst of at least one compound selected from the group consisting of (C₅F₄)(C₆F₅)₂B; (C₅F₄)₃B; (C₆F₅)BF₂; BF(C₆F₅)₂; B(C₆F₅)₃; BCl₂(C₆F₅); BCl(C₆F₅)₂; B(C₆H₅)(C₆F₅)₂; B(Ph)₂(C₆F₅); [C₆H₄(mCF₃)]₃; [C₆H₄(pOCF₃)]₃B; (C₆F₅)B(OH)₂; (C₆F₅)₂BOH; (C₆F₅)₂BH; (C₆F₅)BH₂; (C₇H₁₁)B(C₆F₅)₂; (C₈H₁₄B)(C₆F₅); (C₆F₅)₂B(OC₂H₅); (C₆F₅)₂B-CH₂CH₂Si(CH₃)₃; 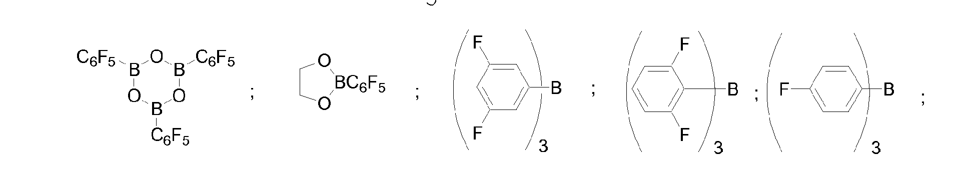 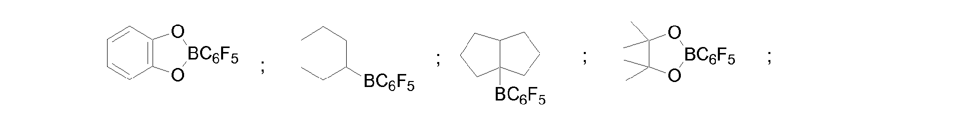 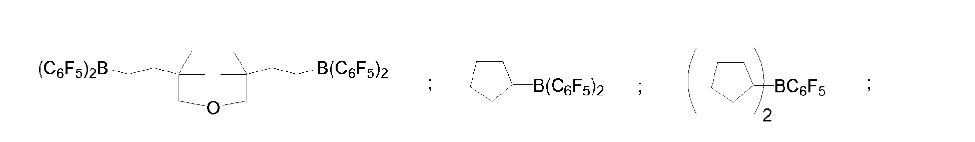 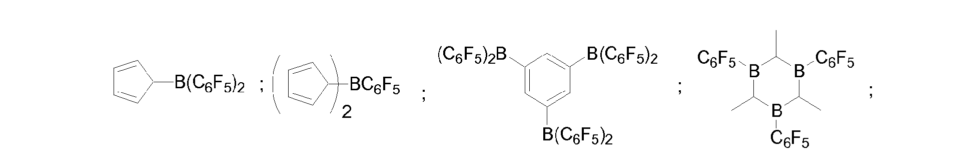 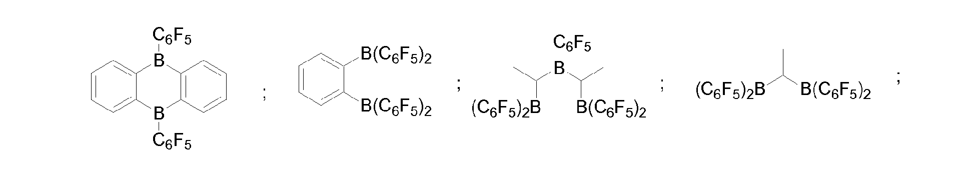 especially boron trifluoride etherate, boranetriphenylphosphine complex, triphenylborane, tris(perfluorotriphenylborane), triethylborane and boron trichloride, tris(pentafluorophenyl)boroxine (9CI), 4,4,5,5-tetramethyl-2-(pentafluorophenyl)-1,3,2-dioxaborolane (9CI), 2-(pentafluorophenyl)-1,3,2-dioxaborolane (9CI), bis(pentafluorophenyl)-cyclohexylborane, di-2,4-cyclopentadien-1-yl(pentafluorophenyl)borane (9CI), (hexahydro-3a(1H)-pentalenyl)bis(pentafluorophenyl)borane (9CI), 1,3-[2-[bis(pentafluorophenyl)boryl]ethyl]-tetramethyldisiloxane, 2,4,6-tris(pentafluorophenyl)borazine (7CI, 8CI, 9CI), 1,2-dihydro-2-(pentafluorophenyl)-1,2-azaborine (9CI), 2-(pentafluorophenyl)-1,3,2-benzodioxaborole (9CI), tris(4-trifluoromethoxyphenyl)borane, tris(3-trifluoromethylphenyl)borane, tris(4-fluorophenyl)borane, tris(2,6-difluorophenyl)borane, tris(3,5-difluorophenyl)borane and also mixtures of the above catalysts.

4. Process for reacting polysiloxanes containing SiH groups, according to Claim 2 and/or 3, **characterized in that** it is possible to operate both solvent-free and using a solvent.

5. Process according to at least one of Claims 2 to 4, **characterized in that** it is a single-stage synthesis.

6. Process according to at least one of Claims 2 to 5, **characterized in that** use is made as alcohols of 2-hydroxyethyl (meth)acrylate, hydroxypropyl (meth)acrylate, hydroxybutyl (meth)acrylate, hydroxypentyl (meth)acrylate, hydroxyhexyl (meth)acrylate, hydroxypolyether (meth)acrylate, hydroxymonoester (meth)acrylic esters, hydroxypolyester (meth)acrylic esters, pentaerythrityl tri(meth)acrylate, pentaerithrityl di(meth)acrylate and propanetrimethylol di(meth)acrylate or mixtures of the aforementioned (meth)acrylated and poly(meth)acrylated alcohols with any desired other alcohols or polyols.

7. Process according to at least one of Claims 2 to 6, **characterized in that** α,ω-polysiloxanes with f = 0, g = 0 and R⁵ = H are used.

8. Process according to at least one of Claims 2 to 7, **characterized in that** mixtures of different SiH polysiloxanes with the singly or multiply (meth)acrylate monoalcohols or polyalcohols, or with the mixtures of the singly or multiply (meth)acrylated monoalcohols or polyalcohols with any desired other alcohols, selected from the group consisting of linear and branched, saturated, mono- and polyunsaturated, aromatic, aliphatic-aromatic monoalcohols and polyalcohols, polyether monoalcohols and polyether polyalcohols, polyester monoalcohols, polyester polyalcohols, amino alcohols, especially N-alkylamino- and N-arylamino-EO- and -PO alcohols, N-alkylamino and N-arylamino alcohols, and also mixtures thereof.

9. Process according to at least one of Claims 2 to 8, **characterized in that** for siloxane compounds having terminal or pendent (meth)acrylic groups use is made as catalysts, instead of the catalysts there, of mixtures of at least one acid and at least one salt of an acid and at least one metal salt or ammonium salt of an organic acid, the metal cation being monovalent or polyvalent.

10. Process according to Claim 9, **characterized in that** as catalysts use is made of mixtures of a carboxylic acid, dithiocarboxylic, aryl-/alkylsulfonic acid, aryl-/alkylphosphonic acid or aryl-/alkylsulfinic acid and at least one metal salt or ammonium salt of an organic acid, the metal cation being monovalent or polyvalent.

11. Process according to at least one of Claims 2 to 10, **characterized in that** any other desired reaction with the Si-H siloxane, in this context specifically a hydrosilylation, is carried out before the alcohols are reacted with the Si-H siloxanes using the Lewis-acidic catalysts or the mixtures of at least one acid and at least one salt of an acid.

12. Curable abhesive coating composition comprising at least one compound according to Claim 1.

13. Curable abhesive coating composition according to Claim 12, **characterized in that** (meth)acrylated polysiloxanes with mixed terminal and pendent modification are used.

14. Curable abhesive coating composition according to Claim 12 or 13, **characterized in that** mixtures of different chain lengths and types of modification of (meth)acrylated polysiloxanes modified terminally and/or pendently are used.

15. Curable abhesive coating composition according to Claims 12 to 14, **characterized in that** it has been prepared in one single synthesis stage.

16. Curable abhesive coating composition according to Claims 12 to 15, **characterized in that** mixtures of modified (meth)acrylate polysiloxanes with other, noninventive radiation-curing polysiloxanes are used.

17. Curable abhesive coating composition according to Claims 12 to 16, **characterized in that** auxiliaries and additives according to the prior art are mixed in, in particular one or more selected from the group consisting of photoinitiators, adhesion promoters, curing accelerators, photosensitizers, antioxidants, oxygen scavengers, organic compounds containing (meth)acrylic groups or organic compounds containing vinyl ether groups, and also dyes, pigments and solid particulate fillers.

18. Use of the curable coating compositions according to Claims 12 to 17 for coating shaped articles and sheetlike supports.

19. Abhesive coating produced by curing the curable coating compositions according to Claims 12 to 17.

20. Abhesive coating according to Claim 19,
**characterized in that** curing takes place using heat or radiation.

## Revendications

1. Organopolysiloxanes comportant des groupes portant des esters d'acide (méth)acrylique liés en milieu et en bout de chaîne ou seulement en milieu de chaîne par des groupes SiOC, de formule moyenne générale (I) 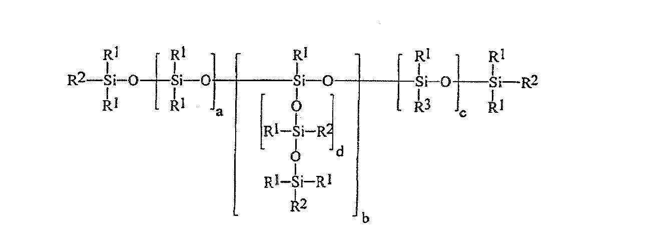 dans laquelle
R¹ représente des radicaux identiques ou différents, choisis parmi des radicaux alkyle, aryle, alkaryle ou aralkyle linéaires ou ramifiés, saturés, mono- ou polyinsaturés, ayant de 1 à 20 atomes de carbone,
R² représente des radicaux R¹ ou R³ identiques ou différents,
R³ représente des monoalcoxylates une ou plusieurs fois (méth)acryloylés ou des polyalcoxylates une ou plusieurs fois (méth)acryloylés, identiques ou différents, ou un mélange des monoalcoxylates ou polyalcoxylates une ou plusieurs fois (méth)acryloylés avec d'autres alcoxylates quelconques qui sont choisis dans le groupe des mono- ou polyalcools, polyéthermonoalcools, polyétherpolyalcools, polyestermonoalcools, polyesterpolyalcools, aminoalcools, linéaires ou ramifiés, saturés, mono- ou polyinsaturés, aromatiques, aliphatiques-aromatiques, en particulier des N-alkyl-, arylamino-oxyéthylène-, -oxypropylène-alcools, N-alkyl- ou arylaminoalcoxylates ainsi que des mélanges de ceux-ci, le rapport des monoalcoxylates ou polyalcoxylates une ou plusieurs fois (méth)acryloylés aux autres alcoxylates quelconques étant choisi de manière qu'au moins un radical monoalcoxylate ou polyalcoxylate une ou plusieurs fois (méth)acryloylé soit contenu dans l'organopolysiloxane,
a va de 0 à 1 000,
b va de 0 à 5,
c va de 1 à 200,
d va de 0 à 1 000.

2. Procédé pour la préparation d'organopolysiloxanes comportant des groupes ester d'acide (méth)acrylique liés en milieu et/ou en bout de chaîne par des groupes SiOC, par mise en réaction de polysiloxanes contenant des groupes SiH, de formule moyenne générale (II) 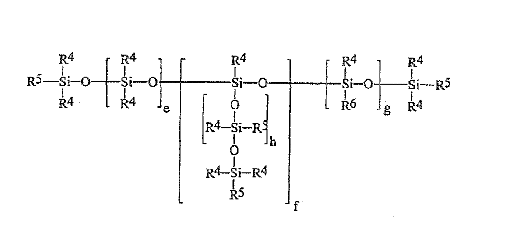 ) dans laquelle
R¹ représente des radicaux identiques ou différents, choisis parmi des radicaux alkyle, aryle, alkaryle ou aralkyle linéaires ou ramifiés, saturés, mono- ou polyinsaturés, ayant de 1 à 20 atomes de carbone,
R⁵ représente H ou R⁴,
R⁶ représente H,
étant entendu qu'au moins l'un des radicaux R⁵ ou R⁶ est un atome d'hydrogène,
e va de 0 à 1 000,
f va de 0 à 5,
g va de 1 à 200,
h va de 0 à 1 000,
avec un alcool qui est choisi dans le groupe des monoalcools ou polyalcools une ou plusieurs fois (méth)acryloylés, ou des mélanges des monoalcools ou polyalcools une ou plusieurs fois (méth)acryloylés avec d'autres alcools quelconques qui sont choisis dans le groupe des mono- ou polyalcools, polyéthermono- ou polyalcools, polyestermonoalcools, polyesterpolyalcools, aminoalcools, linéaires ou ramifiés, saturés, mono- ou polyinsaturés, aromatiques, aliphatiques-aromatiques, en particulier des N-alkyl-, arylamino-oxyéthylène-, oxypropylène-alcools, N-alkyl- ou arylaminoalcools ainsi que des mélanges de ceux-ci, **caractérisé et ce qu**'on remplace en partie ou en totalité les groupes SiH présents du polysiloxane par des radicaux alcoolate des alcools utilisés, en une ou plusieurs étapes de processus, en utilisant un catalyseur de type acide de Lewis ou un catalyseur contenant un acide carboxylique et ses sels.

3. Procédé pour la préparation d'organopolysiloxanes selon la revendication 2, **caractérisé en ce qu'**on utilise comme catalyseur au moins un composé qui est choisi dans le groupe constitué par (C₅F₄) (C₆F₅)₂B ; (C₅F₄)₃B ; (C₆F₅)BF₂ ; BF(C₆F₅)₂ ; B(C₆F₅)₃ ; BCl₂(C₆F₅) ; BCl(C₆F₅)₂ ; B(C₆H₅) (C₆F₅)₂ ; B(Ph)₂(C₆F₅) ; [C₆H₄(mCF₃)]₃ ; [C₆H₄(pOCF₃)]₃B ; (C₆F₅)B(OH)₂ ; (C₆F₅)₂BOH ; (C₆F₅)₂BH ; (C₆F₅)BH₂ ; (C₇H₁₁)B(C₆F₅)₂ ; (C₈H₁₄B) (C₆F₅) ; (C₆F₅)₂B(OC₂H₅) ; (C₆F₅)₂B-CH₂CH₂Si(CH₃)₃ ; 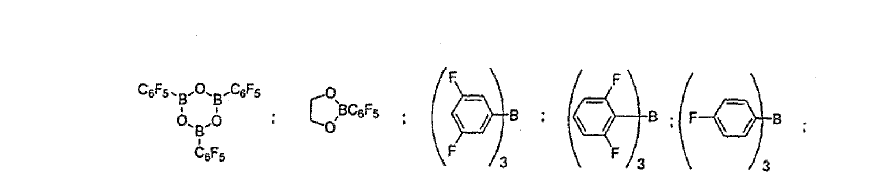 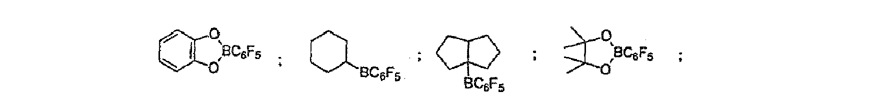 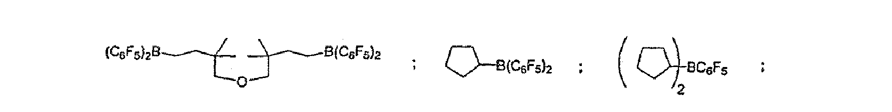 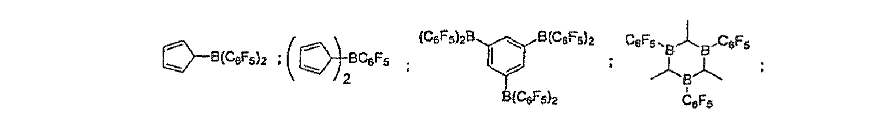 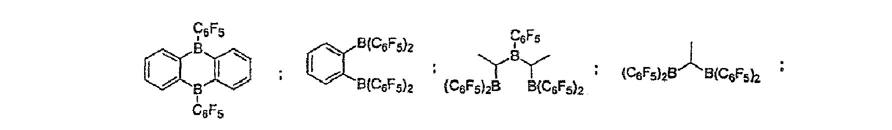 en particulier l'éthérate de trifluorure de bore, le complexe borane-triphénylphosphine, le triphénylborane, le tris(perfluorotriphénylborane), le triéthylborane et le trichlorure de bore, la tris(pentafluorophényl)-boroxine (9CI), le 4,4,5,5-tétraméthyl-2-(pentafluorophényl)-1,3,2-dioxaborolane (9CI), le 2-(pentafluorophényl)-1,3,2-dioxaborolane (9CI), le bis(pentafluorophényl)cyclohexyl-borane, le di-2,4-cyclopentadién-1-yl(pentafluorophényl)-borane (9CI), l'hexahydro-3a(1H)-pentalényl)bis(pentafluorophényl)borane (9CI), le 1,3-[2-(bis(pentafluorophényl)boryl]éthyl]tétraméthyldisiloxane, la 2,4,6-tris(pentafluorophenyl)-borazine (7CI , 8CI , 9CI), la 1, 2-dihydro-2-(pentafluorophényl)-1,2-azaborine (9CI), le 2-(pentafluorophényl)-1,3,2-benzodioxaborol (9CI), le tris ( 4-trifluorométhoxyphényl)borane, le tris(3-trifluorométhylphenyl)borane, le tris(4-fluorophényl)borane, le tris(2,6-difluorophényl)-borane, le tris(3,5-difluorophényl)borane ainsi que des mélanges de ceux-ci.

4. Procédé pour la mise en réaction de polysiloxanes contenant des groupes SiH selon la revendication 2 et/ou la revendication 3, **caractérisé en ce qu'**on peut opérer aussi bien sans solvant qu'en utilisant un solvant.

5. Procédé selon au moins l'une des revendications 2 à 4, **caractérisé en ce qu'**il s'agit d'une synthèse en une étape.

6. Procédé selon au moins l'une des revendications 2 à 5, **caractérisé en ce qu'**on utilise comme alcools le (méth)acrylate de 2-hydroxyéthyle, le (méth)acrylate d'hydroxypropyle, le (méth)acrylate d'hydroxybutyle, le (méth)acrylate d'hydroxypentyle, le (méth)acrylate d'hydroxyhexyle, le (méth)acrylate d'hydroxypolyéther, le (méth)-acrylate d'hydroxymonoester, le (méth)acrylate d'hydroxypolyester, le tri(méth)acrylate de pentaérythritol, le di(méth)acrylate de pentaérythritol et le di(méth)acrylate de propanetriméthylol ou des mélanges des alcools (méth)acryloylés et poly(méth)acryloylés mentionnés précédemment avec d'autres alcools ou polyols quelconques.

7. Procédé selon au moins l'une des revendications 2 à 6, **caractérisé en ce qu'**on utilise des α,ω- polysiloxanes où f = 0, g = 0 et R⁵ = H.

8. Procédé selon au moins l'une des revendications 2 à 7, **caractérisé en ce qu'**on fait réagir des mélanges de divers polysiloxanes-SiH avec des mono- ou polyalcools une ou plusieurs fois (méth)acryloylés, ou des mélanges des mono- ou polyalcools une ou plusieurs fois (méth)acryloylés avec d'autres alcools quelconques qui sont choisis dans le groupe des mono- ou polyalcools, polyéthermonoalcools ou polyétherpolyalcools, polyestermonoalcools, polyesterpolyalcools, aminoalcools, linéaires ou ramifiés, saturés, mono- ou polyinsaturés, aromatiques, aliphatiques-aromatiques, en particulier des N-alkyl-, arylamino-OE-, -OP-alcools, N-alkyl- ou arylaminoalcools ainsi que des mélanges de ceux-ci.

9. Procédé selon au moins l'une des revendications 2 à 8, **caractérisé en ce que** comme catalyseurs pour des composés siloxane à groupes (méth)acryloyle en bout de chaîne ou en milieu de chaîne on utilise, au lieu des catalyseurs qui y sont mentionnés, des mélanges d'au moins un acide et d'au moins un sel d'un acide et d'au moins un sel métallique ou d'ammonium d'un acide organique, le cation métallique pouvant être monovalent ou plurivalent.

10. Procédé selon la revendication 9, **caractérisé en ce qu'**on utilise comme catalyseurs des mélanges d'un acide carboxylique, acide dithiocarboxylique, acide aryl-/alkylsulfonique, acide aryl-/alkyl-phosphonique ou acide aryl-/alkylsulfinique et d'au moins un sel métallique ou d'ammonium d'un acide organique, le cation métallique pouvant être monovalent ou plurivalent.

11. Procédé selon au moins l'une des revendications 2 à 10, **caractérisé en ce qu'**avant la réaction des alcools avec les Si-H-siloxanes avec utilisation des catalyseurs de type acide de Lewis ou des mélanges d'au moins un acide et d'au moins un sel d'un acide on effectue une autre réaction quelconque avec le Si-H-siloxane, en ce cas en particulier une hydrosilylation.

12. Matière de revêtement antiadhésive durcissable contenant au moins un composé selon la revendication 1.

13. Matière de revêtement antiadhésive durcissable selon la revendication 12, **caractérisée en ce qu'**on utilise des polysiloxanes (méth)acryloylés mixtes, modifiés en bout de chaîne et latéralement.

14. Matière de revêtement antiadhésive durcissable selon les revendications 12 et 13, **caractérisée en ce qu'**on utilise des mélanges à différentes longueurs de chaîne et différents types de modification de polysiloxanes (méth)acryloylés modifiés en bout de chaîne et/ou latéralement.

15. Matière de revêtement antiadhésive durcissable selon les revendications 12 à 14, **caractérisée en ce qu'**elle a été préparée en une seule étape de synthèse.

16. Matière de revêtement antiadhésive durcissable selon les revendications 12 à 15, **caractérisée en ce qu'**on utilise des mélanges de polysiloxanes (méth) acryloylés, modifiés, **avec** d'autres polysiloxanes durcissables par irradiation, non selon l'invention.

17. Matière de revêtement antiadhésive durcissable selon les revendications 12 à 16, **caractérisée en ce qu'**on incorpore selon l'état de la technique des adjuvants et additifs, en particulier un ou plusieurs choisis dans le groupe des photoamorceurs, promoteurs d'adhérence, accélérateurs de durcissement, photosensibilisants, antioxydants, capteurs d'oxygène, composés contenant des groupes (méth)acryloyle organiques ou contenant des groupes éther vinylique organiques ainsi que des colorants, des pigments ou des charges particulaires solides.

18. Utilisation des matières de revêtement durcissables selon les revendications 12 à 17, pour le revêtement de corps moulés et de supports plans.

19. Revêtement antiadhésif, produit par durcissement des matières de revêtement durcissables selon les revendications 12 à 17.

20. Revêtement antiadhésif selon la revendication 19, **caractérisé en ce que** le durcissement s'effectue par utilisation de chaleur ou d'un rayonnement.
